(19) Europäisches Patentamt
European Patent Office
Office européen des brevets

(11) EP 0 867 462 B1

(12) **EUROPÄISCHE PATENTSCHRIFT**

(45) Veröffentlichungstag und Bekanntmachung des Hinweises auf die Patenterteilung:
**28.02.2001 Patentblatt 2001/09**

(51) Int Cl.[7]: **C08G 77/50**, C08G 77/46

(21) Anmeldenummer: **98104687.3**

(22) Anmeldetag: **16.03.1998**

(54) **Neuartige Siloxanblockcopolymere mit verknüpften Siloxanblöcken**

Novel siloxane block copolymers with linked siloxane blocks

Nouveaux copolymères séquencés de siloxane contenant des séquences de siloxane liées

(84) Benannte Vertragsstaaten:
**DE FR GB IT NL**

(30) Priorität: **29.03.1997 DE 19713278**

(43) Veröffentlichungstag der Anmeldung:
**30.09.1998 Patentblatt 1998/40**

(73) Patentinhaber: **Goldschmidt AG**
**45127 Essen (DE)**

(72) Erfinder:
- **Burkhart, Georg, Dr.**
  **45239 Essen (DE)**
- **Langenhagen, Rolf-Dieter**
  **45529 Hattingen (DE)**
- **Weier, Andreas, Dr.**
  **45289 Essen (DE)**

(56) Entgegenhaltungen:
**DE-A- 4 229 402**
**DE-A- 4 407 189**
**US-A- 5 136 068**
**US-A- 5 357 018**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neuartige Siloxanblockcopolymere mit verknüpften, unterschiedlichen Siloxanblöcken und deren Verwendung. Nach dem Stand der Technik gibt es eine Vielzahl von oberflächenaktiven Siloxanblockcopolymeren, die in einer breiten Palette von technischen Anwendungen benutzt werden. Dabei kann es sich sowohl um Methylpolysiloxane (siehe DE-C-25 33 074) wie um (pseudo-)halogenalkylsubstituierte Siloxane (siehe DE-C-36 26 297, US-A-3 952 038 oder DE-A-24 02 690) handeln, die z. B. Verwendung als Zellregulatoren in hochelastischen, kalthärtenden Polyurethanschäumen finden. Auch eine breite Palette von Siliconpolyether-Copolymeren und ihr Einsatz als oberflächenaktive Substanzen ist bekannt, wie z. B. in den folgenden Patentschriften exemplarisch beschrieben wird:

DE-C-15 70 647: Chlorpolysiloxanylsulfate werden mit Gemischen von Alkylenoxid-Addukten umgesetzt, welche aus

| | |
|---|---|
| 50 bis 96 OH-Äquivalentprozent | Polyalkylenglykolmonoethern, die aus Ethylenoxid- und Propylenoxideinheiten bestehen und einen Gehalt von 40 bis 70 Gew.-% Oxypropyleneinheiten und ein Molgewicht von 1000 bis 3000 aufweisen, deren Hydroxylgruppen vorzugsweise sekundär sind, und |
| 5 bis 50 OH-Äquivalentprozent | Alkylenoxid-Addukten mehrwertiger Hydroxylverbindungen eines Molgewichtes von 130 bis 3500, deren Polyalkylenglykolkomponente aus Ethylenoxid- und/oder Propylenoxideinheiten bestehen und die ein OH-Äquivalentgewicht bis zu 1750 haben und deren Hydroxylgruppen vorzugsweise sekundär sind, bestehen und |

wobei die Mengenverhältnisse so gewählt sind, daß auf ein Säureäquivalent des Chlorpolysiloxanylsulfates höchstens 1,4, vorzugsweise 1,05 bis 1,2 OH-Äquivalente kommen.

DE-C-16 94 366: Es werden als Schaumstabilisatoren solche Polysiloxan-Polyoxyalkylen-Blockmischpolymerisate verwendet, deren Polysiloxanblock in an sich bekannter Weise aufgebaut ist, deren Polyoxyalkylenblock jedoch aus

| | |
|---|---|
| 25 bis 70 Gew.-% | eines Polyoxyalkylens mit einem durchschnittlichen Molekulargewicht von 1600 bis 4000 und einem Ethylenoxidgehalt von 20 bis 100 Gew.-%, Rest Propylenoxid und gegebenenfalls höhere Alkylenoxide, und |
| 30 bis 75 Gew.-% | eines Polyoxyalkylens mit einem durchschnittlichen Molekulargewicht von 400 bis 1200 und einem Ethylenoxidgehalt von 65 bis 100 Gew.-%, Rest Propylenoxid und gegebenenfalls höhere Alkylenoxide, besteht. |

DE-A-25 41 865: Die Polysiloxan-Polyoxyalkylen-Blockmischpolymerisate sind bezüglich ihrer Polyoxyalkylenblöcke so definiert, daß der eine Polyoxyalkylenblock ein mittleres Molgewicht von 900 bis 1300 hat und zu 30 bis 55 Gew.-% aus Ethylenoxid, Rest Propylenoxid, und der andere Polyoxyalkylenblock ein mittleres Molgewicht von 3800 bis 5000 hat und zu 30 bis 50 Gew.-% aus Ethylenoxid, Rest Propylenoxid, besteht.

EP-A-0 275 563: Das in dieser Patentanmeldung beschriebene Blockmischpolymerisat umfaßt drei verschiedene Polyoxyalkylenblöcke, nämlich einen Block, welcher 20 bis 60 Gew.-% Oxyethyleneinheiten enthält, bei einem Molgewicht von 3000 bis 5000, einen weiteren Block mit 20 bis 60 Gew.-% Oxyethyleneinheiten und einem Molgewicht von 800 bis 2900 und einen dritten Block nur aus Polyoxypropyleneinheiten und einem Molgewicht von 130 bis 1200.

Weiter werden in der Patentliteratur Siloxanblockcopolymere, die als Emulgatoren Einsatz finden, beschrieben, bei denen an lineare Polysiloxane sowohl Polyoxyalkylengruppen als auch langkettige Alkylgruppen gebunden sind (siehe z. B. US-A-3 234 252, US-A-4 047 958 oder DE-C-34 36 177).

Weitere Schutzrechte (z. B. US-A-5 136 068, EP-A-0 381 318 und EP-A-0 529 847) beschreiben oberflächenaktive Siloxanblockcopolymere für den Einsatz als Emulgatoren, bei denen Polyoxyalkylenreste und langkettige Alkylreste am Polysiloxan gebunden sind und eine zusätzliche Verknüpfung des Siloxanblockcopolymeren über einen zweiwertigen organischen Rest vorliegt. Das Merkmal der beschriebenen Siloxanblockcopolymeren ist, daß in allen Fällen gleiche Siloxanblöcke durch Reaktion von SiH-Gruppen mit z. B. Diolefinen, Divinylbenzol oder 1,3-Divinyltetramethyldisiloxan miteinander verknüpft werden.

Trotz der so erhältlichen Vielzahl von Siloxanblockcopolymeren bedingt die große Anzahl der Einsatzgebiete für diese Wirksubstanzen, z. B.

- als Additive für lösemittelhaltige und auch lösemittelarme Lacke, Farben und Pasten,
- zur Beschichtung von Textilien und Papier (Tissues),

- als Ausgangsstoffe für Vernetzungsreaktionen,
- als Entschäumer,
- als Emulgatoren,
- als Additive in Kosmetikzubereitungen,
- als Stabilisatoren für das weite Feld der PU-Schaumherstellung (zum einen Vielzahl der möglichen Polyurethanschaumtypen, wie z. B. Weichschaum, Hartschaum, Esterschaum, Kaltschaum, Verpackungsschaum, flammlaminierbarer Schaum, Formschaum, Integralschaum etc., zum anderen neuere Verschäumungstechniken wie Variable Pressure Foaming, Verschäumungen mit unter Druck stehenden inerten Gasen oder auch 'Forced Cooling Processes', z. B. ENVIRO-CURE, Fa. CRAIN INDUSTRIES)

die Notwendigkeit, nach weiter verbesserten Strukturen zu suchen.

Überraschenderweise ist nun gefunden worden, daß die Verknüpfung von unterschiedlichen Siloxanblöcken in einem Molekül erstaunliche Effekte in verschiedenen anwendungstechnischen Ausprüfungen bewirkt. Gemäß der Lehre der vorliegenden Erfindung können auf einfache Weise unterschiedliche Siloxancopolymerblöcke (unterschiedlich bezogen auf die Modifizierungsreste am Siloxan und/oder auf die Struktur des Siloxansegmentes) über Kopplungsglieder miteinander verknüpft werden und somit gezielt neuartige Siloxanblockcopolymere synthetisiert werden, bei denen sich die verknüpften Siloxancopolymerblöcke z. B. in ihren Polaritäten, in ihrer Hydrophil/Hydrophob-Balance oder Anteilen an reaktiven Gruppen unterscheiden.

Gegenstand der Erfindung sind somit Siloxanblockcopolymere der allgemeinen durchschnittlichen Formel:

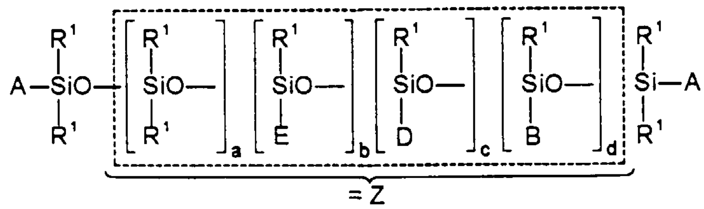

(I)

wobei die Reste und Indices folgende Bedeutung haben:

A = Rest $R^1$, Rest B, Rest E oder ein Rest der Formel IIa

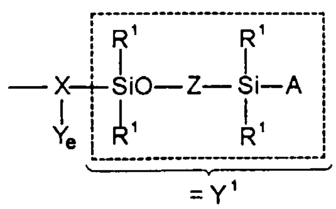

(IIa)

oder ein Rest der Formel IIb

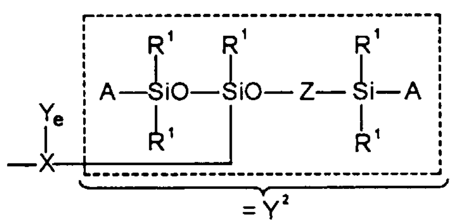

(IIb)

B = Rest der Formel IIa oder IIb

Y = Rest $Y^1$ oder Rest $Y^2$,

D = Rest der Formel

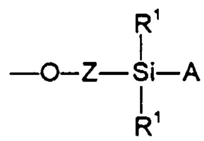

$R^1$ = ein Alkylrest mit 1 bis 30 Kohlenstoffatomen, ein substituierter Alkylrest, ein gegebenenfalls substituierter Arylrest oder ein gegebenenfalls substituierter Alkarylrest, wobei jedoch mindestens 80 % der Reste $R^1$ Methylgruppen sind,
a hat einen Wert von 3 bis 200,
b hat einen Wert von 0 bis 50,
c hat einen Wert von 0 bis 10,
d hat einen Wert von 0 bis 5 und
e hat einen Wert von 0 bis 4,

wobei die Werte für a, b, c, d und e in den einzelnen Segmenten Z der Reste A, B und D unterschiedlich sein können,

E = Rest, der

a) ein Rest der allgemeinen Formel

$$-R^2_f\text{-O-}(C_mH_{2m}O\text{-})_nR^3$$

ist, wobei

$R^2$ ein zweiwertiger Alkylrest, der auch verzweigt sein kann, ist und
f einen Wert von 0 oder 1,
m einen Wert von durchschnittlich 2 bis 4,
n einen Wert von 0 bis 100 hat und
$R^3$ ein Wasserstoffrest, ein gegebenenfalls substituierter Alkylrest mit 1 bis 6 Kohlenstoffatomen, ein Acylrest oder ein -O-CO-NH-$R^4$-Rest ist, bei dem $R^4$ ein gegebenenfalls substituierter Alkyl- oder Arylrest ist, und/oder

b) die Bedeutung eines epoxyfunktionalisierten, gegebenenfalls Heteroatome enthaltenden Alkylsubstituenten hat, und/oder
c) die Bedeutung eines Mono-, Di- und Trihydroxyalkylsubstituenten, der auch aromatisch oder verzweigt und partiell oder vollständig verethert oder verestert sein kann, hat, und/oder
d) die Bedeutung eines halogen- oder pseudohalogensubstituierten Alkyl-, Aryl- oder Aralkylrestes, der gegebenenfalls auch verzweigt sein kann, hat,

X = ein mehrwertiger organischer Rest,

mit der Maßgabe, daß mindestens ein Rest der Formel IIa oder IIb im Molekül vorhanden ist und mindestens zwei der Segmente Z unterschiedlich sind.
Dabei können auch verschiedene Substituenten in Kombination eingesetzt werden, wie z. B. für Polyethersubstituenten in der DE-C-42 29 402 beschrieben. Die Substituenten können sich gegebenenfalls unterscheiden, z. B. in ihrer Molmasse, bei Polyethern evtl. in ihrer Endgruppe $R^3$ oder den Anteilen der verwendeten Monomeren, der Art der Monomeren etc.
X ist ein mehrwertiger organischer Rest (Wertigkeit = 2 + e). Der Rest X wird durch die Reaktion von Verbindungen, die 2 + e hydrosilylierbare olefinische Doppelbindungen pro Molekül enthalten, mit SiH-Gruppen gebildet. Pro Molekül der erfindungsgemäßen Verbindungen muß mindestens ein Rest X vorhanden sein. Das durch Verknüpfung erhaltene Molekül sollte $\leq$ 600 Si-Atome enthalten.
Dem Fachmann ist klar, daß die erhaltenen Verbindungen in Form eines Gemisches vorliegen, dessen Verteilung im wesentlichen durch statistische Gesetze bestimmt wird. Die Werte für a, b, c, d, n und die Anzahl der X-Reste pro Molekül entsprechen daher Mittelwerten.

Ein geringer Anteil der Reste $R^1$ kann ein Wasserstoffrest sein, nämlich dann, wenn das eingesetzte Wasserstoffsiloxan nicht vollständig mit den eingesetzten, olefinisch ungesättigten Verbindungen (z. B. Allylpolyether, α-Olefine, Allylglycidylether etc.) und den organischen Verbindungen, die das Verbrückungsglied X bilden, abreagiert.

X kann z. B. ein Verbrückungsglied der Formel

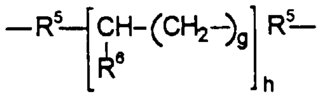

sein, wobei

- $R^5$ ein zweiwertiger Alkylrest, der auch verzweigt sein kann, und
- $R^6$ ein Wasserstoffrest, ein gegebenenfalls verzweigter Alkylrest oder der Rest $R^5$ ist und
- g einen Wert von 0 bis 5 und
- h einen Wert von 0 bis 4 hat,

oder der Formel

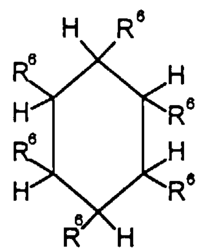

wobei $R^6$ die Bedeutung wie zuvor hat,
oder der Formel

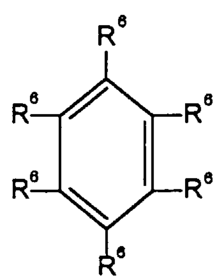

wobei $R^6$ die Bedeutung wie zuvor hat,
oder der Formel

$$-R^5-O-(C_{m'}H_{2m'}O-)_{n'}R^5-$$

wobei

- $R^5$ die Bedeutung wie zuvor,
- m' einen Wert von durchschnittlich 2 bis 4 und
- n' einen Wert von 0 bis 20 hat,

oder der Formel

$$-R^5-(CO-)_kOCH_2-(CR^7_2-)_iCH_2O-(CO-)_kR^5-$$

wobei

$R^5$ die Bedeutung wie zuvor hat und
$R^7$ ein Wasserstoffrest, ein Alkylrest, ein Hydroxyalkylrest oder der Rest $-CH_2O-(CO-)_kR^5-$ ist und
i einen Wert von 0 bis 10 und
k einen Wert von 0 oder 1 hat,

oder der Formel

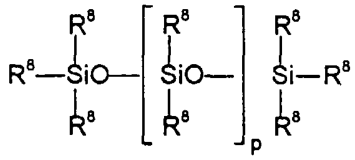

wobei

$R^8$ ein Alkylrest, ein substituierter Alkylrest, ein Phenylrest oder der Rest $R^5$ ist und
p einen Wert von 0 bis 10 hat, wobei der Wert von 0 bevorzugt ist, und

der Rest $R^8$, wenn er die Bedeutung eines Alkylrestes hat, bevorzugt ein Alkylrest mit 1 bis 6 Kohlenstoffatomen ist, besonders bevorzugt ein Methylrest,
oder der Formel

$$-R^5-NH-CO-NH-R^5-$$

wobei

$R^5$ die Bedeutung wie zuvor hat.

Die Summe der $R^5$-Reste pro X-Rest muß 2 + e betragen. Bevorzugt ist $R^5$ der Rest $-(CH_2)_2-$ oder $-(CH_2)_3-$.
Beispiele für Substanzen, mit denen der Rest X gebildet werden kann, sind 1,7-Octadien, Trimethylolpropandiallylether, Trimethylolpropantriallylether, Pentaerythrittriallylether, Divinylbenzol, Divinylcyclohexan, 1,4-Butandioldivinylether, Diallylpolyether, Diallylharnstoff und 1,3-Divinyltetramethyldisiloxan.
Das Wesentliche der Erfindung ist, daß im durchschnittlichen Molekül mindestens zwei unterschiedliche Siloxanblockcopolymere miteinander verknüpft sind. Das heißt, daß sich Z in Formel I von dem in Formel IIa und/oder IIb unterscheiden muß. Dies wird an den folgenden, schematisierten Formeln näher erläutert:

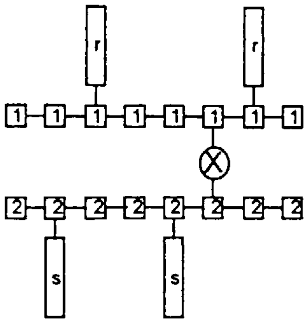

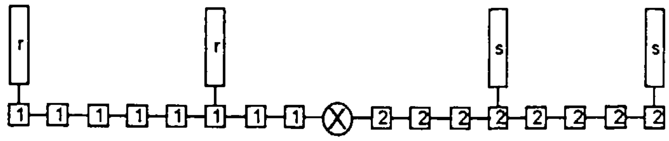

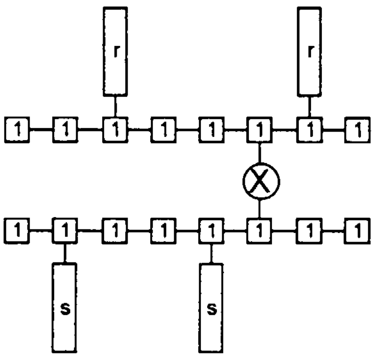

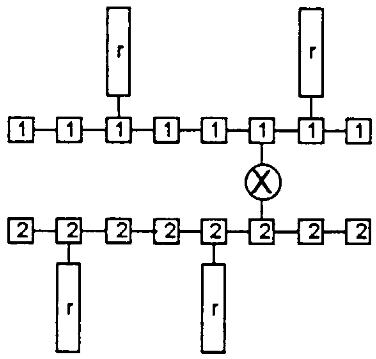

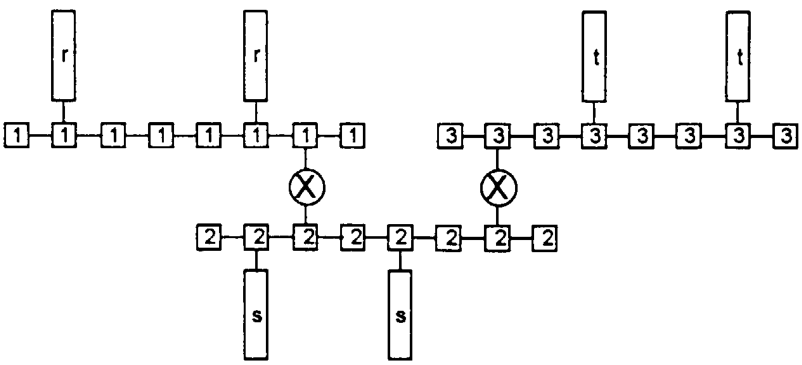

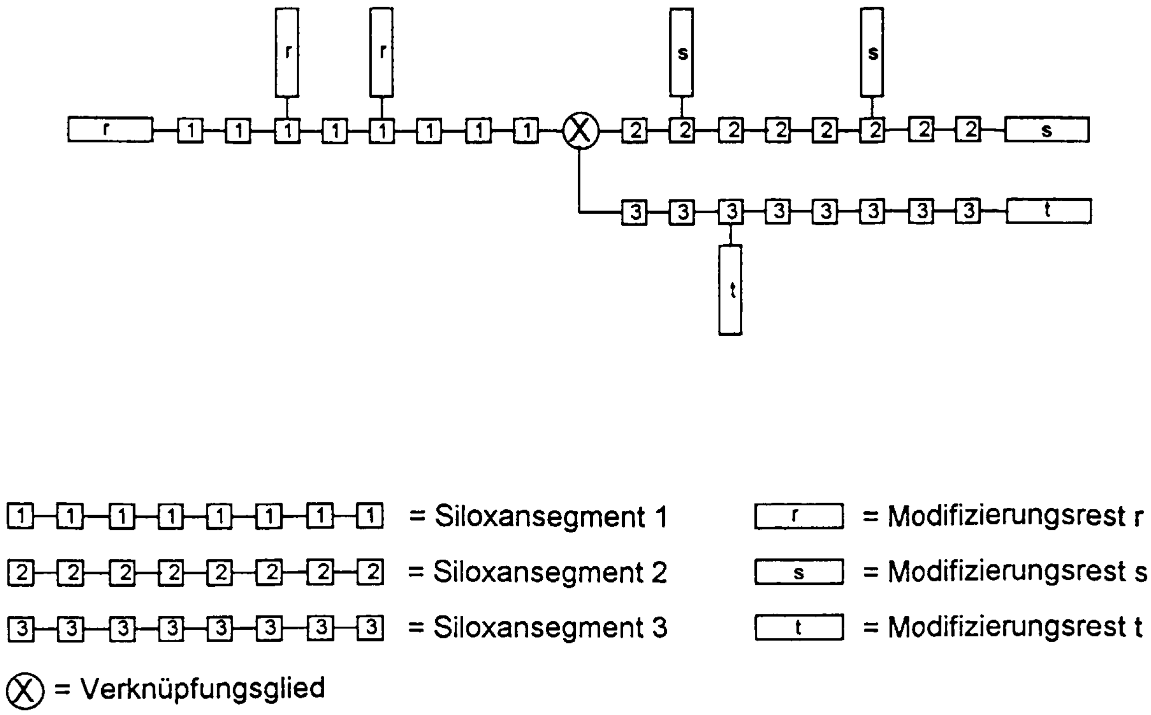


Die Modifizierungsreste r, s und t haben die Bedeutung der Reste $R^1$ und E. Der Charakter der Erfindung ist, daß entweder der Modifizierungsrest r sich von mindestens einem der Modifizierungsreste s oder t unterscheidet oder daß sich das Siloxansegment 1 von mindestens einem der anderen verwendeten Siloxansegmente unterscheidet. Nachfolgend werden einige Kombinationen für den Modifizierungsrest r und s aufgezeigt, die exemplarisch, aber nicht limitierend, für den Umfang der Erfindung gesehen werden sollen.

| Modifizierungsrest r | Modifizierungsrest s |
|---|---|
| PO-reicher Polyetherrest | EO-reicher Polyetherrest |
| hochmolekularer Polyetherrest | niedrigmolekularer Polyetherrest |
| OH-terminierter Polyetherrest | $CH_3$-terminierter Polyetherrest |
| Polyetherrest | Alkylrest |
| langkettiger Alkylrest | kurzkettiger Alkylrest |
| Polyetherrest | Glycidoxypropylrest |
| Alkylrest | Glycidoxypropylrest |
| Polyetherrest | Hydroxyalkylrest |
| Alkylrest | Hydroxyalkylrest |
| Polyetherrest | Hydroxyalkoxyalkylrest |
| Alkylrest | Hydroxyalkoxyalkylrest |
| Polyetherrest | Phenylrest |
| Alkylrest | Phenylrest |
| Polyetherrest | 3-(4'-Hydroxy-3'-methoxyphenyl)-propylrest |
| Alkylrest | 3-(4'-Hydroxy-3'-methoxyphenyl)-propylrest |
| Polyetherrest | Phenylethylrest |
| Alkylrest | Phenylethylrest |
| Polyetherrest | Norbornylrest |

Produkte, bei denen der Modifizierungsrest noch reaktive Gruppen enthält, wie z. B. OH- oder Epoxygruppen, eignen sich einerseits zur Behandlung von Oberflächen (z. B. Faserpräparation, Lackadditve, etc.) und andererseits

zu weiteren chemischen Umsetzungen. So lassen sich die erfindungsgemäßen OH-haltigen Siloxanblockcopolymeren mit Methacrylsäure verestern. Aus den epoxygruppenhaltigen Siloxanblockcopolymeren lassen sich nach bekannten Verfahren z. B. Quats und Betaine herstellen.

Der jeweilige Modifizierungsrest muß nicht einheitlich sein, z. B. kann der Modifizierungsrest r aus einer Kombination der Reste $r^1$, $r^2$, $r^3$ etc. bestehen, die ebenfalls die Bedeutung der Reste $R^1$ und E haben, wenn sichergestellt ist, daß entweder wenigstens einer der weiter verwendeten Modifizierungsreste (s, etc.) eine andere Zusammensetzung hat, oder daß wenigstens zwei unterschiedliche Siloxansegmente vorhanden sind.

Generell bevorzugt sind solche Verbindungen, die sich in der durchschnittlichen Zahl der Si-Atome in den einzelnen, verknüpften Siloxanblöcken um mehr als 20 % unterscheiden oder bei denen sich die Massen der Modifizierungsreste r, s oder t in den einzelnen Siloxansegmenten um mehr als 20 % unterscheiden.

In Abhängigkeit von dem gewünschten Einsatzgebiet sind aus der Gruppe der beanspruchten Verbindungen verschiedene Bereiche bevorzugt:

Für Anwendungen bei der Herstellung von Polyurethan-Weichblockschäumen z. B. sind Verbindungen mit $b > 3$ und $5 < (a+c+d)/b < 20$ bevorzugt. Besonders bevorzugt sind aber Produkte mit einem durchschnittlichen m im Molekül von $2,3 < m < 3,1$ und ganz besonders bevorzugt mit einem durchschnittlichen m im Molekül von $2,5 < m < 2,8$.

Für die Anwendung bei der Herstellung von Polyurethan-Hartschaum oder Polyurethan-Esterschaum sind Verbindungen mit einem durchschnittlichen n im Molekül von $n < 28$ bevorzugt, und besonders bevorzugt sind Verbindungen mit einem durchschnittlichen m im Molekül von $m < 2,5$. Ganz besonders bevorzugt sind Verbindungen mit einem durchschnittlichen Quotienten $(a+c+d)/b$ im Molekül von $(a+c+d)/b < 8$.

Für Anwendungen bei der Herstellung von Kaltformschäumen sind Verbindungen mit einem durchschnittlichen b im Molekül von $b < 5$ bevorzugt, und besonders bevorzugt sind Verbindungen mit einer Gesamtzahl der Reste $E < 7$.

Für Anwendungen in der Kosmetik oder als Emulgator sind Verbindungen bevorzugt, bei denen mindestens 60 % der Reste $R^3$ Wasserstoffreste sind oder solche, die aromatische Substituenten in mindestens einem der verwendeten Modifizierungsreste enthalten. Besonders bevorzugt sind Verbindungen, bei denen mindestens 80 % der Reste $R^3$ Wasserstoffreste sind und ganz besonders bevorzugt Verbindungen, bei denen alle Reste $R^3$ Wasserstoffreste sind und der durchschnittliche Wert von m im Molekül kleiner als 2,3 ist.

Für Anwendungen als Additiv im Bereich Lacke und Farben sind solche Verbindungen bevorzugt, bei denen mindestens 80 % der Reste $R^3$ Wasserstoffreste sind; und besonders bevorzugt sind solche, bei denen der Rest E die Bedeutung eines epoxyfunktionalisierten Alkylsubstituenten hat.

Nachfolgend wird beispielhaft die Herstellung der erfindungsgemäßen Siloxanblockcopolymeren beschrieben. Die Umsetzungen können auch in Lösemitteln durchgeführt werden, besonders dann, wenn hochviskose Produkte entstehen.

Herstellung von Blockcopolymer 1

In einem mit Rührer, Thermometer, Gaseinleitung und Rückflußkühler versehenen Kolben werden

| | |
|---|---|
| 96,5 g (0,0200 Mol) | Siloxan mit folgender durchschnittlicher Zusammensetzung $(CH_3)_3SiO-[(CH_3)_2SiO-]_{58}[(CH_3)HSiO-]_6Si(CH_3)_3$, |
| 14,7 g (0,0100 Mol) | Siloxan mit folgender durchschnittlicher Zusammensetzung $H(CH_3)_2SiO-[(CH_3)_2SiO-]_{18}Si(CH_3)_2H$, |
| 7,5 g (0,0125 Mol) | Polyether mit folgender durchschnittlicher Zusammensetzung $CH_2=CH-CH_2O-(C_2H_4O-)_{12}CH_3$, |
| 56,6 g (0,0375 Mol) | Polyether mit folgender durchschnittlicher Zusammensetzung $CH_2=CH-CH_2O-(C_2H_4O-)_5(C_3H_6O-)_{21}CH_3$, |
| 301,8 g (0,0750 Mol) | Polyether mit folgender durchschnittlicher Zusammensetzung $CH_2=CH-CH_2O-(C_2H_4O-)_{45}(C_3H_6O-)_{34}CH_3$ und |
| 4,3 g (0,0200 Mol) | Trimethylolpropandiallylether |

vorgelegt. Durch die Apparatur wird Stickstoff geleitet, und unter intensivem Rühren wird der Kolbeninhalt auf 105 °C aufgeheizt. Nun wird der Ansatz mit 0,5 g einer 10 %igen Lösung von $H_2PtCl_6$ $6H_2O$ in i-Propanol versetzt. Es setzt eine leicht exotherme Reaktion ein. Man läßt den Ansatz abreagieren. Im Verlauf der Reaktion wird der Ansatz klar. Nach 3,5 Std. beträgt der SiH-Umsatz 97,7 % (bestimmt über Wasserstoffabspaltung mit n-Butanol in alkalischem Medium). Man erhält ein klares, gelbes Produkt. Das erhaltene Blockcopolymer 1 hat die folgende durchschnittliche Zusammensetzung:

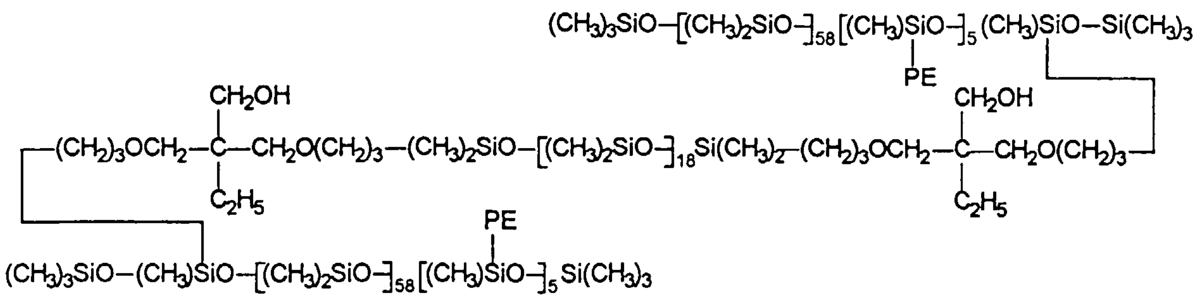

Der Rest PE ist zu 10 % der Rest $-(CH_2)_3O-(C_2H_4O-)_{12}CH_3$
und 30 % der Rest $-(CH_2)_3O-(C_2H_4O-)_5(C_3H_6O-)_{21}CH_3$
und 60 % der Rest $-(CH_2)_3O-(C_2H_4O-)_{45}(C_3H_6O-)_{34}CH_3$.

Herstellung von Blockcopolymer 2

In einem mit Rührer, Thermometer, Gaseinleitung und Rückflußkühler versehenen Kolben werden

| | |
|---|---|
| 48,2 g (0,0100 Mol) | Siloxan mit folgender durchschnittlicher Zusammensetzung $(CH_3)_3SiO-[(CH_3)_2SiO-]_{58}[(CH_3)HSiO-]_6Si(CH_3)_3$, |
| 25,4 g (0,0100 Mol) | Siloxan mit folgender durchschnittlicher Zusammensetzung $(CH_3)_3SiO-[(CH_3)_2SiO-]_{28}[(CH_3)HSiO-]_5Si(CH_3)_3$, |
| 6,8 g (0,0113 Mol) | Polyether mit folgender durchschnittlicher Zusammensetzung $CH_2=CH-CH_2O-(C_2H_4O-)_{12}CH_3$, |
| 51,0 g (0,0338 Mol) | Polyether mit folgender durchschnittlicher Zusammensetzung $CH_2=CH-CH_2O-(C_2H_4O-)_5(C_3H_6O-)_{21}CH_3$, |
| 271,6 g (0,0675 Mol) | Polyether mit folgender durchschnittlicher Zusammensetzung $CH_2=CH-CH_2O-(C_2H_4O-)_{45}(C_3H_6O-)_{34}CH_3$ und |
| 1,9 g (0,0100 Mol) | 1,3-Divinyltetramethyldisiloxan |

vorgelegt. Durch die Apparatur wird Stickstoff geleitet, und unter intensivem Rühren wird der Kolbeninhalt auf 105 °C aufgeheizt. Nun wird der Ansatz mit 0,45 g einer 10 %igen Lösung von $H_2PtCl_6\ 6H_2O$ in i-Propanol versetzt. Es setzt eine leicht exotherme Reaktion ein. Man läßt den Ansatz abreagieren. Im Verlauf der Reaktion wird der Ansatz klar. Nach 3 Std. beträgt der SiH-Umsatz 97,5 % (bestimmt über Wasserstoffabspaltung mit n-Butanol in alkalischem Medium). Man erhält ein klares, gelbes Produkt. Das erhaltene Blockcopolymer 2 hat die folgende durchschnittliche Zusammensetzung:

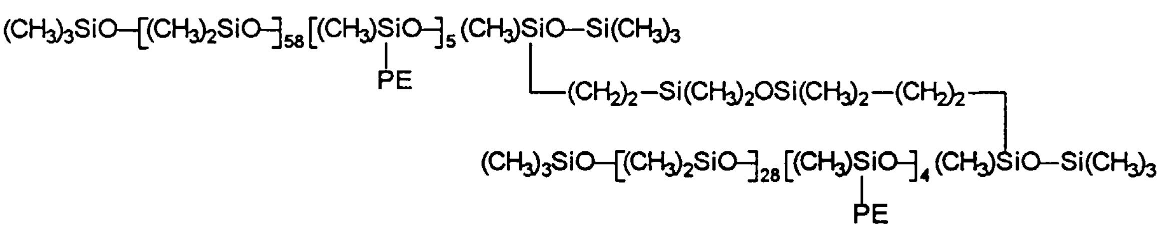

Der Rest PE ist zu 10 % der Rest $-(CH_2)_3O-(C_2H_4O-)_{12}CH_3$
und 30 % der Rest $-(CH_2)_3O-(C_2H_4O-)_5(C_3H_6O-)_{21}CH_3$
und 60 % der Rest-$(CH_2)_3O-(C_2H_4O-)_{45}(C_3H_6O-)_{34}CH_3$.

Herstellung von Blockcopolymer 3

In einem mit Rührer, Thermometer, Gaseinleitung und Rückflußkühler versehenen Kolben werden

| | |
|---|---|
| 48,2 g (0,0100 Mol) | Siloxan mit folgender durchschnittlicher Zusammensetzung $(CH_3)_3SiO-[(CH_3)_2SiO-]_{58}[(CH_3)HSiO-]_6Si(CH_3)_3$, |
| 50,8 g (0,0200 Mol) | Siloxan mit folgender durchschnittlicher Zusammensetzung $(CH_3)_3SiO-[(CH_3)_2SiO-]_{28}[(CH_3)HSiO-]_5Si(CH_3)_3$, |
| 22,1 g (0,0150 Mol) | Polyether mit folgender durchschnittlicher Zusammensetzung $CH_2=CH-CH_2O-(C_2H_4O-)_{16}(C_3H_6O-)_{12}CH_3$, |
| 124,6 g (0,0825 Mol) | Polyether mit folgender durchschnittlicher Zusammensetzung $CH_2=CH-CH_2O-(C_2H_4O-)_5(C_3H_6O-)_{21}CH_3$, |
| 60,4 g (0,0150 Mol) | Polyether mit folgender durchschnittlicher Zusammensetzung $CH_2=CH-CH_2O-(C_2H_4O-)_{45}(C_3H_6O-)_{34}CH_3$, |
| 150,4 g (0,0375 Mol) | Polyether mit folgender durchschnittlicher Zusammensetzung $CH_2=CH-CH_2O-(C_2H_4O-)_{45}(C_3H_6O-)_{34}H$ und |
| 2,2 g (0,0200 Mol) | 1,7-Octadien |

vorgelegt. Durch die Apparatur wird Stickstoff geleitet, und unter intensivem Rühren wird der Kolbeninhalt auf 105 °C aufgeheizt. Nun wird der Ansatz mit 0,5 g einer 10 %igen Lösung von $H_2PtCl_6$ $6H_2O$ in i-Propanol versetzt. Es setzt eine leicht exotherme Reaktion ein. Man läßt den Ansatz abreagieren. Im Verlauf der Reaktion wird der Ansatz klar. Nach 6 Std. beträgt der SiH-Umsatz 98,5 % (bestimmt über Wasserstoffabspaltung mit n-Butanol in alkalischem Medium). Man erhält ein klares, gelbes Produkt. Das erhaltene Blockcopolymer 3 hat die folgende durchschnittliche Zusammensetzung:

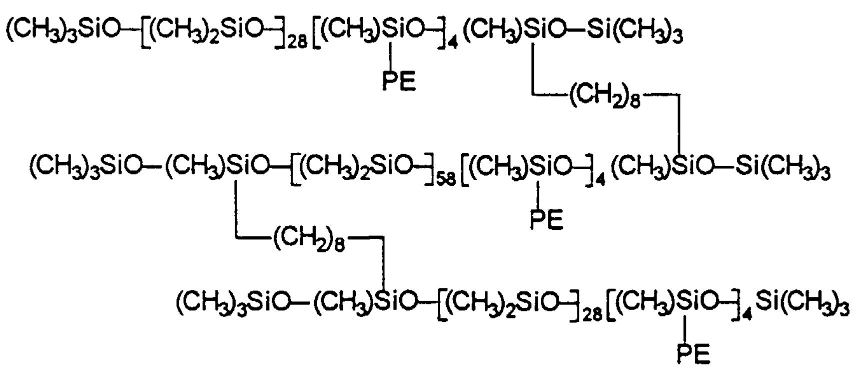

Der Rest PE ist zu 10 % der Rest $-(CH_2)_3O-(C_2H_4O-)_{16}(C_3H_6O-)_{12}CH_3$
und 55 % der Rest $-(CH_2)_3O-(C_2H_4O-)_5(C_3H_6O-)_{21}CH_3$
und 10 % der Rest $-(CH_2)_3O-(C_2H_4O-)_{45}(C_3H_6O-)_{34}CH_3$
und 25 % der Rest $-(CH_2)_3O-(C_2H_4O-)_{45}(C_3H_6O-)_{34}H$.

Herstellung von Blockcopolymer 4

In einem mit Rührer, Thermometer, Gaseinleitung und Rückflußkühler versehenen Kolben werden

| | |
|---|---|
| 96,5 g (0,0200 Mol) | Siloxan mit folgender durchschnittlicher Zusammensetzung $(CH_3)_3SiO-[(CH_3)_2SiO-]_{58}[(CH_3)HSiO-]_6Si(CH_3)_3$, |
| 35,8 g (0,0100 Mol) | Siloxan mit folgender durchschnittlicher Zusammensetzung $H(CH_3)_2SiO-[(CH_3)_2SiO-]_{32}[(CH_3)RSiO-]_6Si(CH_3)_2H$, R = $-CH_2-CH(CH_3)-C_6H_5$ (erhältlich z. B. durch Equilibrierung eines Gemisches von 1,1,3,3-Tetramethyldisiloxan, Octamethylcyclotetrasiloxan und cyclischem Siloxan der Formel $[(CH_3)Si(CH_2CH(CH_3)C_6H_5)O-]_4$ mit Trifluormethansulfonsäure), |
| 7,5 g (0,0125 Mol) | Polyether mit folgender durchschnittlicher Zusammensetzung $CH_2=CH-CH_2O-(C_2H_4O-)_{12}CH_3$, |
| 56,6 g (0,0375 Mol) | Polyether mit folgender durchschnittlicher Zusammensetzung $CH_2=CH-CH_2O-(C_2H_4O-)_5(C_3H_6O-)_{21}CH_3$, |
| 301,8 g (0,0750 Mol) | Polyether mit folgender durchschnittlicher Zusammensetzung $CH_2=CH-CH_2O-(C_2H_4O-)_{45}(C_3H_6O-)_{34}CH_3$, |
| 4,3 g (0,0200 Mol) | Trimethylolpropandiallylether und 300 ml Toluol |

vorgelegt. Durch die Apparatur wird Stickstoff geleitet, und unter Rühren wird der Kolbeninhalt auf 90 °C aufgeheizt. Nun wird der Ansatz mit 0,55 g einer 10 %igen Lösung von $H_2PtCl_6$ $6H_2O$ in i-Propanol versetzt. Es setzt eine leicht exotherme Reaktion ein. Man läßt den Ansatz abreagieren. Im Verlauf der Reaktion wird der Ansatz klar. Nach 10 Std. beträgt der SiH-Umsatz 98,2 % (bestimmt über Wasserstoffabspaltung mit n-Butanol in alkalischem Medium). Danach wird die Überleitung von Stickstoff beendet und der Rückflußkühler gegen einen Destillationsaufsatz ausgetauscht. Bei einer Temperatur von 80 °C und einem Vakuum von ca. 20 mbar werden flüchtige Bestandteile abdestilliert. Zurück bleibt ein klares, gelbes Produkt. Das erhaltene Blockcopolymer 4 hat die folgende durchschnittliche Zusammensetzung:

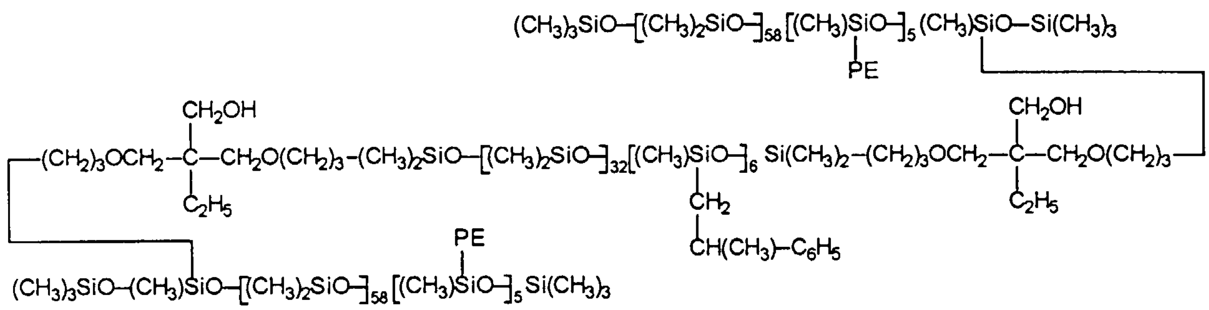

Der Rest PE ist zu 10 % der Rest $-(CH_2)_3O-(C_2H_{40}-)_{12}CH_3$
und 30 % der Rest $-(CH_2)_3O-(C_2H_4O-)_5(C_3H_6O-)_{21}CH_3$
und 60 % der Rest $-(CH_2)_3O-(C_2H_4O-)_{45}(C_3H_6O-)_{34}CH_3$.

Herstellung von Blockcopolymer 5

In einem mit Rührer, Thermometer, Gaseinleitung und Rückflußkühler versehenen Kolben werden

| | |
|---|---|
| 48,2 g (0,0100 Mol) | Siloxan mit folgender durchschnittlicher Zusammensetzung $(CH_3)_3SiO-[(CH_3)_2SiO-]_{58}[(CH_3)HSiO-]_6Si(CH_3)_3$, |
| 50,8 g (0,0200 Mol) | Siloxan mit folgender durchschnittlicher Zusammensetzung $H(CH_3)_2SiO-[(CH_3)_2SiO-]_{30}[(CH_3)HSiO-]_3Si(CH_3)_2H$, |
| 9,8 g (0,0163 Mol) | Polyether mit folgender durchschnittlicher Zusammensetzung $CH_2=CH-CH_2O-(C_2H_4O-)_{12}CH_3$, |
| 73,6 g (0,0488 Mol) | Polyether mit folgender durchschnittlicher Zusammensetzung $CH_2=CH-CH_2O-(C_2H_4O-)_5(C_3H_6O-)_{21}CH_3$, |
| 392,3 g (0,0975 Mol) | Polyether mit folgender durchschnittlicher Zusammensetzung $CH_2=CH-CH_2O-(C_2H_4O-)_{45}(C_3H_6O-)_{34}CH_3$, |
| 2,6 g (0,0100 Mol) | Pentaerythrittriallylether und 385 g Solvesso 150 |

vorgelegt. Durch die Apparatur wird Stickstoff geleitet, und unter Rühren wird der Kolbeninhalt auf 105 °C aufgeheizt. Nun wird der Ansatz mit 0,6 g einer 10 %igen Lösung von $H_2PtCl_6$ $6H_2O$ in i-Propanol versetzt. Es setzt eine leicht exotherme Reaktion ein. Man läßt den Ansatz abreagieren. Im Verlauf der Reaktion wird der Ansatz klar. Nach 3 Std. beträgt der SiH-Umsatz 100 % (bestimmt über Wasserstoffabspaltung mit n-Butanol in alkalischem Medium). Man erhält eine klare, gelbe Lösung des gewünschten Blockcopolymeren in Solvesso 150. Das erhaltene Blockcopolymer 5 hat die folgende durchschnittliche Zusammensetzung:

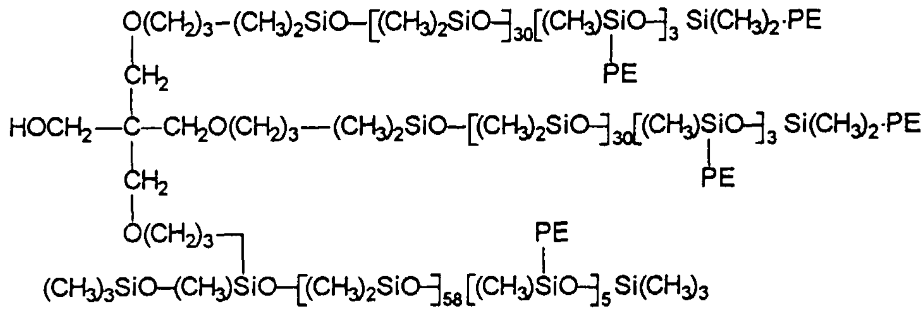

Der Rest PE ist zu 10 % der Rest $-(CH_2)_3O-(C_2H_4O-)_{12}CH_3$
und 30 % der Rest $-(CH_2)_3O-(C_2H_4O-)_5(C_3H_6O-)_{21}CH_3$
und 60 % der Rest $-(CH_2)_3O-(C_2H_4O-)_{45}(C_3H_6O-)_{34}CH_3$.

<u>Herstellung von Blockcopolymer 6</u>

In einem mit Rührer, Thermometer, Gaseinleitung und Rückflußkühler versehenen Kolben werden

| | |
|---|---|
| 48,2 g (0,0100 Mol) | Siloxan mit folgender durchschnittlicher Zusammensetzung $(CH_3)_3SiO-[(CH_3)_2SiO-]_{58}[(CH_3)HSiO-]_6Si(CH_3)_3$, |
| 25,4 g (0,0100 Mol) | Siloxan mit folgender durchschnittlicher Zusammensetzung $(CH_3)_3SiO-[(CH_3)_2SiO-]_{28}[(CH_3)HSiO-]_5Si(CH_3)_3$, |
| 6,8 g (0,0113 Mol) | Polyether mit folgender durchschnittlicher Zusammensetzung $CH_2=CH-CH_2O-(C_2H_4O-)_{12}CH_3$, |
| 51,0 g (0,0338 Mol) | Polyether mit folgender durchschnittlicher Zusammensetzung $CH_2=CH-CH_2O-(C_2H_4O-)_5(C_3H_6O-)_{21}CH_3$, |
| 264,6 g (0,0675 Mol) | Polyether mit folgender durchschnittlicher Zusammensetzung $CH_2=CH-CH_2O-(C_2H_4O-)_{42}(C_3H_6O-)_{34}COCH_3$, |
| 1,4 g (0,0100 Mol) | Diallylharnstoff und 265 g Solvesso 150 |

vorgelegt. Durch die Apparatur wird Stickstoff geleitet, und unter Rühren wird der Kolbeninhalt auf 105°C aufgeheizt. Nun wird der Ansatz mit 0,45 g einer 10 %igen Lösung von $H_2PtCl_6$ $6H_2O$ in i-Propanol versetzt. Es setzt eine leicht exotherme Reaktion ein. Man läßt den Ansatz abreagieren. Im Verlauf der Reaktion wird der Ansatz klar. Nach 7 Std. beträgt der SiH-Umsatz 98,6 % (bestimmt über Wasserstoffabspaltung mit n-Butanol in alkalischem Medium). Man erhält eine klare, gelbe Lösung des gewünschten Blockcopolymeren in Solvesso 150. Das erhaltene Blockcopolymer 6 hat die folgende durchschnittliche Zusammensetzung:

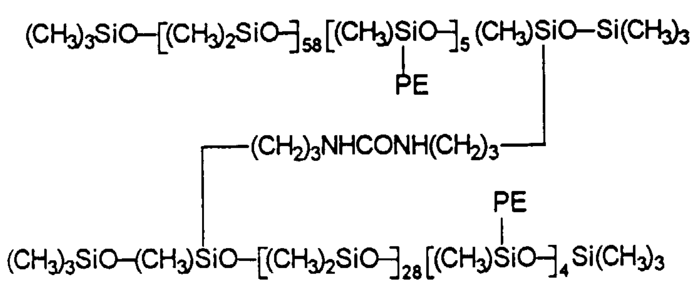

Der Rest PE ist zu 10 % der Rest $-(CH_2)_3O-(C_2H_4O-)_{12}CH_3$
und 30 % der Rest $-(CH_2)_3O-(C_2H_4O-)_5(C_3H_6O-)_{21}CH_3$
und 60 % der Rest $-(CH_2)_3O-(C_2H_4O-)_{42}(C_3H_6O-)_{34}COCH_3$.

Herstellung von Blockcopolymer 7

Stufe a)

In einem mit Rührer, Thermometer, Gaseinleitung und Rückflußkühler versehenen Kolben werden

| | |
|---|---|
| 86,7 g (0,040 Mol) | Siloxan mit folgender durchschnittlicher Zusammensetzung $(CH_3)_3SiO\text{-}[(CH_3)_2SiO\text{-}]_{23}[(CH_3)HSiO\text{-}]_5Si(CH_3)_3$ |

und

| | |
|---|---|
| 179,9 g (0,176 Mol)[1] | Polyether mit folgender durchschnittlicher Zusammensetzung $CH_2{=}CH\text{-}CH_2O\text{-}(C_2H_4O\text{-})_{15}(C_3H_6O\text{-})_5CH_3$ |

vorgelegt. Durch die Apparatur wird Stickstoff geleitet, und unter intensivem Rühren wird der Kolbeninhalt auf 100 °C aufgeheizt. Nun wird der Ansatz mit 8 mg cis-$[PtCl_2(NH_3)_2]$ versetzt. Im Verlauf der Reaktion wird der Ansatz klar. Nach 3 Std. hat der Ansatz soweit abreagiert, daß der Rest-SiH-Gehalt vom Kolbeninhalt in etwa dem entspricht, der sich einstellt, wenn pro Molekül vom eingesetzten Siloxan eine SiH-Gruppe verbleibt.

Stufe b)

In einem weiteren mit Rührer, Thermometer, Gaseinleitung und Rückflußkühler versehenen Kolben werden

| | |
|---|---|
| 143,3 g (0,040 Mol) | Siloxan mit folgender durchschnittlicher Zusammensetzung $H(CH_3)_2SiO\text{-}[(CH_3)_2SiO\text{-}]_{40}[(CH_3)HSiO\text{-}]_8Si(CH_3)_2H$ |

und

| | |
|---|---|
| 306,5 g (0,396 Mol)[1] | Polyether mit folgender durchschnittlicher Zusammensetzung $CH_2{=}CH\text{-}CH_2O\text{-}(C_2H_4O\text{-})_{11}(C_3H_6O\text{-})_4H$ |

vorgelegt. Durch die Apparatur wird Stickstoff geleitet, und unter intensivem Rühren wird der Kolbeninhalt auf 100 °C aufgeheizt. Nun wird der Ansatz mit 14 mg cis-$[PtCl_2(NH_3)_2]$ versetzt. Im Verlauf der Reaktion wird der Ansatz klar. Nach 3 Std. hat der Ansatz soweit abreagiert, daß der Rest-SiH-Gehalt vom Kolbeninhalt in etwa dem entspricht, der sich einstellt, wenn pro Molekül vom eingesetzten Siloxan eine SiH-Gruppe verbleibt.

Stufe c) (Kopplung)

Die Stufe a) wird komplett zur Stufe b) gegeben. Nach gutem Durchmischen werden 8,6 g (0,04 Mol) Trimethylolpropandiallylether und 22 mg cis-$[PtCl_2(NH_3)_2]$ hinzugefügt. Nach weiterem Rühren unter Stickstoffatmosphäre erreicht man nach 6 Std. einen SiH-Umsatz von 97,4 % (bestimmt über Wasserstoffabspaltung mit n-Butanol in alkalischem Medium). Man erhält ein klares, gelbes Produkt. Das erhaltene Blockcopolymer 7 hat die folgende durchschnittliche Zusammensetzung:

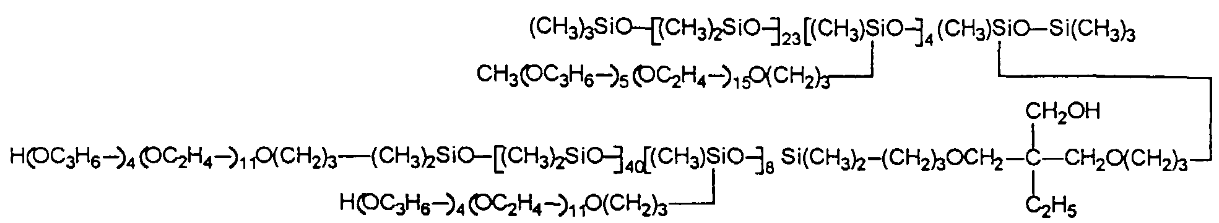

([1]) Obwohl eine SiH-Gruppe pro eingesetztem Molekül Siloxan für die anschließende Kopplungsreaktion verbleiben soll, wird vom Reaktionspartner ein kleiner Überschuß eingesetzt, der den durch Nebenreaktion auftretenden Verlust an reaktiven endständigen Doppelbindungen, Umlagerung zu internen Doppelbindungen, ausgleicht.)

([1]) siehe Anmerkung bei Blockcopolymer 7, Stufe a))

Herstellung von Blockcopolymer 8

Stufe a)

In einem mit Rührer, Thermometer, Gaseinleitung und Rückflußkühler versehenen Kolben werden

| | |
|---|---|
| 86,7 g (0,040 Mol) | Siloxan mit folgender durchschnittlicher Zusammensetzung $(CH_3)_3SiO-[(CH_3)_2SiO-]_{23}[(CH_3)HSiO-]_5Si(CH_3)_3$ |

und

| | |
|---|---|
| 179,9 g (0,176 Mol)[1)] | Polyether mit folgender durchschnittlicher Zusammensetzung $CH_2=CH-CH_2O-(C_2H_4O-)_{15}(C_3H_6O-)_5CH_3$ |

vorgelegt. Durch die Apparatur wird Stickstoff geleitet, und unter intensivem Rühren wird der Kolbeninhalt auf 100 °C aufgeheizt. Nun wird der Ansatz mit 8 mg cis-$[PtCl_2(NH_3)_2]$ versetzt. Im Verlauf der Reaktion wird der Ansatz klar. Nach 3 Std. hat der Ansatz soweit abreagiert, daß der Rest-SiH-Gehalt vom Kolbeninhalt in etwa dem entspricht, der sich einstellt, wenn pro Molekül vom eingesetzten Siloxan durchschnittlich eine SiH-Gruppe verbleibt.

Anschließend werden 13,2 g (0,12 Mol) 1,7-Octadien und 9 mg cis-$[PtCl_2(NH_3)_2]$ zum Ansatz gegeben. Nach weiterem Rühren bei 100 °C erreicht man nach 6 Std. einen SiH-Umsatz von 98,9 %.

Nun wird das überschüssige 1,7-Octadien bei einer Temperatur von 100 °C und einem Vakuum von ca. 15 mbar abdestilliert. Das erhaltene Zwischenprodukt hat folgende durchschnittliche Zusammensetzung:

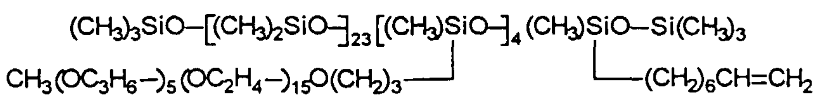

Stufe b)

In einem weiteren mit Rührer, Thermometer, Gaseinleitung und Rückflußkühler versehenen Kolben werden

| | |
|---|---|
| 143,3 g (0,040 Mol) | Siloxan mit folgender durchschnittlicher Zusammensetzung $H(CH_3)_2SiO-[(CH_3)_2SiO-]_{40}[(CH_3)HSiO-]_8Si(CH_3)_2H$ |

und

| | |
|---|---|
| 306,5 g (0,396 Mol)[1)] | Polyether mit folgender durchschnittlicher Zusammensetzung $CH_2=CH-CH_2O-(C_2H_4O-)_{11}(C_3H_6O-)_4H$ |

vorgelegt, gut durchmischt und danach die Stufe a) komplett hinzugefügt. Durch die Apparatur wird Stickstoff geleitet, und unter intensivem Rühren wird der Kolbeninhalt auf 100 °C aufgeheizt. Nun wird der Ansatz mit 22 mg cis-$[PtCl_2(NH_3)_2]$ versetzt. Nach 9 Std. beträgt der SiH-Umsatz 97,5 % (bestimmt über Wasserstoffabspaltung mit n-Butanol in alkalischem Medium). Man erhält ein klares, gelbes Produkt. Das erhaltene Blockcopolymer 8 hat die folgende durchschnittliche Zusammensetzung:

([1)] siehe Anmerkung bei Blockcopolymer 7, Stufe a))
([1)] siehe Anmerkung bei Blockcopolymer 7, Stufe a))

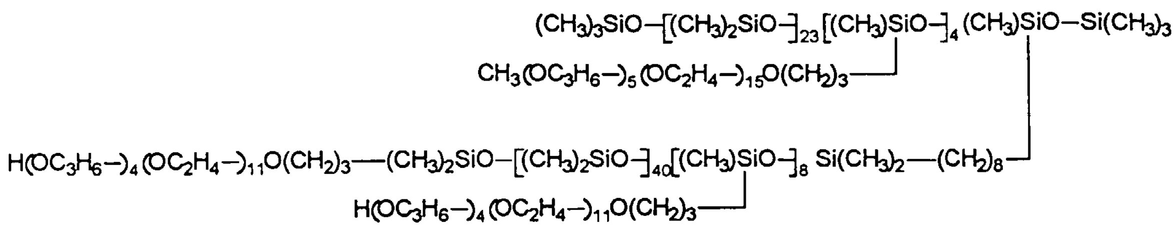

Herstellung von Blockcopolymer 9

Stufe a)

In einem mit Rührer, Thermometer, Gaseinleitung und Rückflußkühler versehenen Kolben werden

| | |
|---|---|
| 205,5 g (0,02 Mol) | Siloxan mit folgender durchschnittlicher Zusammensetzung $H(CH_3)_2SiO-[(CH_3)_2SiO-]_{60}[(CH_3)Si(C_{16}H_{33})O-]_{20}Si(CH_3)_2H$ (erhältlich z. B. durch Equilibrierung eines Gemisches von 1,1,3,3-Tetramethyldisiloxan, Octamethylcyclotetrasiloxan und cyclischem Siloxan der Formel $[(CH_3)(C_{16}H_{33})SiO-]_4$ mit Trifluormethansulfonsäure) und |
| 18,6 g (0,10 Mol) | 1,3-Divinyltetramethyldisiloxan |

vorgelegt. Durch die Apparatur wird Stickstoff geleitet, und unter Rühren wird der Kolbeninhalt auf 100 °C aufgeheizt. Nun wird der Ansatz mit 12 mg $Pt_2Cl_4(C_6H_{10})_2$ versetzt und 4 Std. gerührt. Danach läßt sich kein SiH-gebundener Wasserstoff mehr nachweisen. Anschließend wird das im Überschuß eingesetzte 1,3-Divinyltetramethyldisiloxan im Vakuum (ca. 15 mbar) bei 120 °C abdestilliert. Man erhält als Zwischenprodukt 0,02 Mol Siloxan mit folgender durchschnittlicher Zusammensetzung:

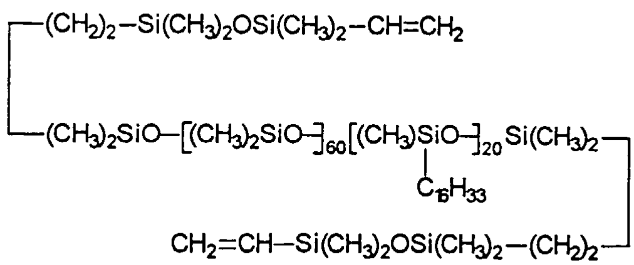

Stufe b)

In einem weiteren mit Rührer, Thermometer, Gaseinleitung und Rückflußkühler versehenen Kolben werden

| | |
|---|---|
| 28,0 g (0,040 Mol) | Siloxan mit folgender durchschnittlicher Zusammensetzung $(CH_3)_3SiO-[(CH_3)_2SiO-]_4[(CH_3)HSiO-]_4Si(CH_3)_3$ |

und

| | |
|---|---|
| 65,5 g (0,132 Mol) [1] | Polyether mit folgender durchschnittlicher Zusammensetzung $CH_2-CH-CH_2O-(C_2H_4O-)_6(C_3H_6O-)_3H$ |

vorgelegt. Durch die Apparatur wird Stickstoff geleitet, und unter intensivem Rühren wird der Kolbeninhalt auf 100 °C aufgeheizt. Nun wird der Ansatz mit 6 mg cis-$[PtCl_2(NH_3)_2]$ versetzt. Im Verlauf der Reaktion wird der Ansatz klar. Nach 3 Std. hat der Ansatz soweit abreagiert, daß der Rest-SiH-Gehalt vom Kolbeninhalt in etwa dem entspricht, der sich einstellt, wenn pro Molekül vom eingesetzten Siloxan durchschnittlich eine SiH-Gruppe verbleibt. Nun werden die komplette Stufe a) und 306 g Laurinsäurehexylester der Stufe b) hinzugefügt und nach Erreichen von 100 °C nochmal

([1] siehe Anmerkung bei Blockcopolymer 7, Stufe a))

16 mg $Pt_2Cl_4(C_6H_{10})_2$ zugesetzt. Nach 9 Std. beträgt der SiH-Umsatz 96 %. Man erhält eine klare, gelbe Lösung. Die Lösung enthält das Blockcopolymer 9, das folgende durchschnittliche Zusammensetzung hat:

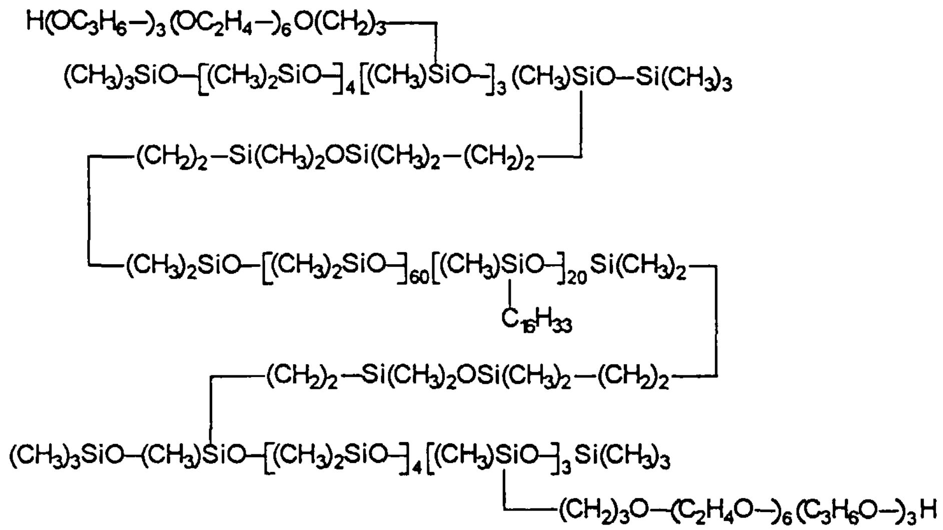

Herstellung von Blockcopolymer 10

In einem mit Rührer, Thermometer, Gaseinleitung und Rückflußkühler versehenen Kolben werden

| | |
|---|---|
| 118,7 g (0,02 Mol) | Siloxan mit folgender durchschnittlicher Zusammensetzung $(CH_3)_3SiO$-$[(CH_3)_2SiO$-$]_{60}[(CH_3)HSiO$-$]_{22}Si(CH_3)_3$, |
| 22,6 g (0,02 Mol) | Siloxan mit folgender durchschnittlicher Zusammensetzung $(CH_3)_3SiO$-$[(CH_3)_2SiO$-$]_9[(CH_3)HSiO$-$]_5Si(CH_3)_3$, |
| 49,6 g (0,10 Mol) | Polyether mit folgender durchschnittlicher Zusammensetzung $CH_2{=}CH$-$CH_2O$-$(C_2H_4O$-$)_6(C_3H_6O$-$)_3H$, |
| 2,2 g (0,02 Mol) | 1,7-Octadien und 311 g Laurinsäurehexylester (als Lösemittel) |

vorgelegt. Durch die Apparatur wird Stickstoff geleitet, und unter Rühren wird der Kolbeninhalt auf 90 °C aufgeheizt. Nun wird der Ansatz mit 20 mg cis-$[PtCl_2(NH_3)_2]$ versetzt. Nach 10 Min. wird die Temperatur auf 115 °C erhöht, und es werden 117,8 g (0,525 Mol) 1-Hexadecen zugetropft. Dabei soll die Temperatur nicht über 120 °C ansteigen. Anschließend läßt man noch 9 Std. nachreagieren. Der SiH-Umsatz erreicht 97,6 %. Man erhält eine klare, gelbliche Lösung. Die Lösung enthält das Blockcopolymer 10, das folgende durchschnittliche Zusammensetzung besitzt:

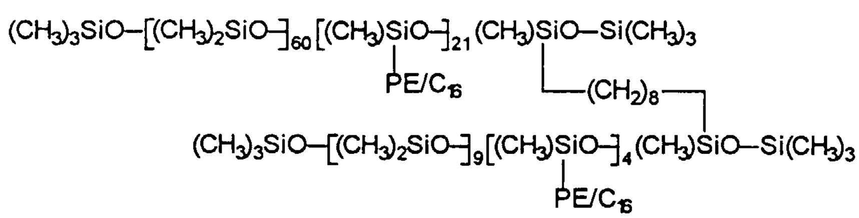

Der Rest $PE/C_{16}$ ist zu 16 % der Rest $-(CH_2)_3O$-$(C_2H_4O$-$)_6(C_3H_6O$-$)_3H$
und 84 % der Rest $-C_{16}H_{33}$.

Herstellung von Blockcopolymer 11

Stufe a)

In einem mit Rührer, Thermometer, Gaseinleitung und Rückflußkühler versehenen Kolben werden

| | |
|---|---|
| 70,0 g (0,10 Mol) | Siloxan mit folgender durchschnittlicher Zusammensetzung $(CH_3)_3SiO-[(CH_3)_2SiO-]_4[(CH_3)HSiO-]_4Si(CH_3)_3$ |

und

| | |
|---|---|
| 198,0 g (0,33 Mol)[1)] | Polyether mit folgender durchschnittlicher Zusammensetzung $CH_2=CH-CH_2O-(C_2H_4O-)_{12}CH_3$ |

vorgelegt. Durch die Apparatur wird Stickstoff geleitet, und unter intensivem Rühren wird der Kolbeninhalt auf 100 °C aufgeheizt. Nun wird der Ansatz mit 9 mg cis-$[PtCl_2(NH_3)_2]$ versetzt. Im Verlauf der Reaktion wird der Ansatz klar. Nach 3 Std. hat der Ansatz soweit abreagiert, daß der Rest-SiH-Gehalt vom Kolbeninhalt in etwa dem entspricht, der sich einstellt, wenn pro Molekül vom eingesetzten Siloxan durchschnittlich eine SiH-Gruppe verbleibt.

Anschließend werden 33,0 g (0,3 Mol) 1,7-Octadien und 14 mg cis-$[PtCl_2(NH_3)_2]$ zum Ansatz gegeben. Nach weiterem Rühren bei 100 °C erreicht man nach 6 Std. einen SiH-Umsatz von 99,2 %. Nun wird das überschüssige 1,7-Octadien bei einer Temperatur von 100 °C und einem Vakuum von ca. 15 mbar abdestilliert. Das erhaltene Zwischenprodukt hat folgende durchschnittliche Zusammensetzung:

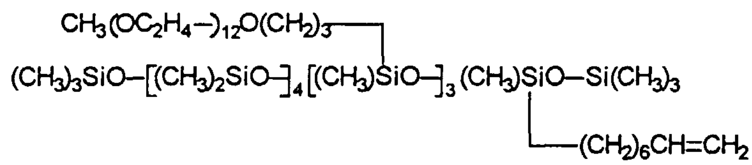

Stufe b)

In einem weiteren mit Rührer, Thermometer, Gaseinleitung und Rückflußkühler versehenen Kolben werden

| | |
|---|---|
| 113,0 g (0,10 Mol) | Siloxan mit folgender durchschnittlicher Zusammensetzung $(CH_3)_3SiO-[(CH_3)_2SiO-]_9[(CH_3)HSiO-]_5Si(CH_3)_3$ |

vorgelegt. Durch die Apparatur wird Stickstoff geleitet, und unter Rühren wird der Kolbeninhalt auf 100 °C aufgeheizt. Nun werden 6 mg cis-$[PtCl_2(NH_3)_2]$ und 1 g Natriumcarbonat dem Ansatz zugesetzt, und anschließend werden 50,2 g (0,44 Mol) Allylglycidylether ([1)] siehe Anmerkung bei Blockcopolymer 7, Stufe a)) in 20 Minuten zugetropft. Nach 1 Std. hat der Ansatz soweit abreagiert, daß der Rest-SiH-Gehalt vom Kolbeninhalt in etwa dem entspricht, der sich einstellt, wenn pro Molekül vom eingesetzten Siloxan durchschnittlich eine SiH-Gruppe verbleibt. Danach werden die Stufe a) und 8 mg cis-$[PtCl_2(NH_3)_2]$ hinzugefügt, und man läßt noch 7 Std. nachreagieren. Der SiH-Umsatz erreicht 96,9 %. Bei 120 °C und ca. 15 mbar werden flüchtige Anteile abdestilliert. Nach dem Abkühlen wird der Ansatz filtriert. Man erhält ein klares, gelbes Produkt. Das erhaltene Blockcopolymer 11 hat folgende durchschnittliche Zusammensetzung:

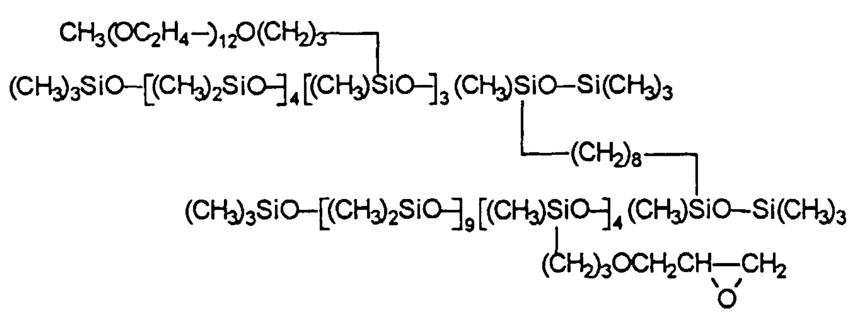

Das Blockcopolymer 11 hat reaktive Gruppen und ist weiteren chemischen Reaktionen zugänglich, z. B. lassen sich Quats und Betaine (hierzu siehe z. B. DE-C-34 17 912) daraus herstellen. Betaine finden z. B. in kosmetischen Zubereitungen Anwendung.

([1)] siehe Anmerkung bei Blockcopolymer 7, Stufe a))

Herstellung von Blockcopolymer 12

Stufe a)

In einem mit Rührer, Thermometer, Gaseinleitung und Rückflußkühler versehenen Kolben werden

| | |
|---|---|
| 157,1 g (0,10 Mol) | Siloxan mit folgender durchschnittlicher Zusammensetzung $H(CH_3)_2SiO-[(CH_3)_2SiO-]_{12}[(CH_3)(C_3H_6Cl)SiO-]_4Si(CH_3)_2H$ (erhältlich z. B. durch Equilibrierung eines Gemisches von 1,1,3,3-Tetramethyldisiloxan, Octamethylcyclotetrasiloxan und cyclischem Siloxan der Formel $[(CH_3)(C_3H_6Cl)SiO-]_4$ mit Trifluormethansulfonsäure) und |
| 93,2 g (0,50 Mol) | 1,3-Divinyltetramethyldisiloxan |

vorgelegt. Durch die Apparatur wird Stickstoff geleitet, und unter Rühren wird der Kolbeninhalt auf 100 °C aufgeheizt. Nun wird der Ansatz mit 18 mg $Pt_2Cl_4(C_6H_{10})_2$ versetzt und 3,5 Std. gerührt. Danach läßt sich kein SiH-gebundener Wasserstoff mehr nachweisen. Anschließend wird das im Überschuß eingesetzte 1,3-Divinyltetramethyldisiloxan im Vakuum (ca. 15 mbar) bei 120 °C abdestilliert. Man erhält als Zwischenprodukt 0,1 Mol Siloxan mit folgender durchschnittlicher Zusammensetzung:

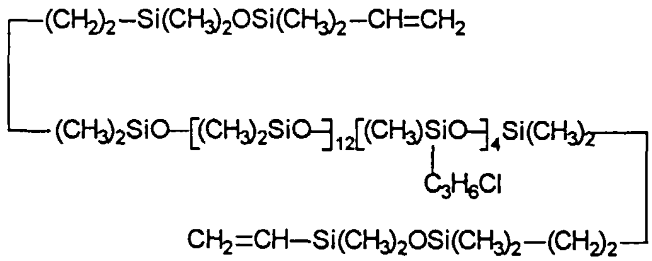

Stufe b)

In einem weiteren mit Rührer, Thermometer, Gaseinleitung und Rückflußkühler versehenen Kolben werden

| | |
|---|---|
| 139,9 g (0,20 Mol) | Siloxan mit folgender durchschnittlicher Zusammensetzung $(CH_3)_3SiO-[(CH_3)_2SiO-]_4[(CH_3)HSiO-]_4Si(CH_3)_3$ |

und

| | |
|---|---|
| 87,2 g (0,66 Mol)[1)] | 3-Allyloxy-1,2-propandiol |

vorgelegt. Durch die Apparatur wird Stickstoff geleitet, und unter intensivem Rühren wird der Kolbeninhalt auf 100 °C aufgeheizt. Nun wird der Ansatz mit 2,3 g $Na_2CO_3$ und 30 mg $Pt_2Cl_4(C_6H_{10})_2$ versetzt. Im Verlauf der Reaktion wird der Ansatz klar. Nach 35 Min. hat der Ansatz soweit abreagiert, daß der Rest-SiH-Gehalt vom Kolbeninhalt in etwa dem entspricht, der sich einstellt, wenn pro Molekül vom eingesetzten Siloxan durchschnittlich eine SiH-Gruppe verbleibt. Nun wird das in Stufe a) erhaltene Produkt komplett zum Ansatz gegeben, und es wird weiter bei 100 °C gerührt. Nach 4,5 Std. beträgt der SiH-Umsatz 97,8 % (bestimmt über Wasserstoffabspaltung mit n-Butanol in alkalischem Medium). Nach Abkühlung auf Raumtemperatur wird der Ansatz filtriert. Man erhält eine klare, gelbe Flüssigkeit. Das erhaltene Blockcopolymer 12 hat folgende durchschnittliche Zusammensetzung:

([1)] siehe Anmerkung bei Blockcopolymer 7, Stufe a))

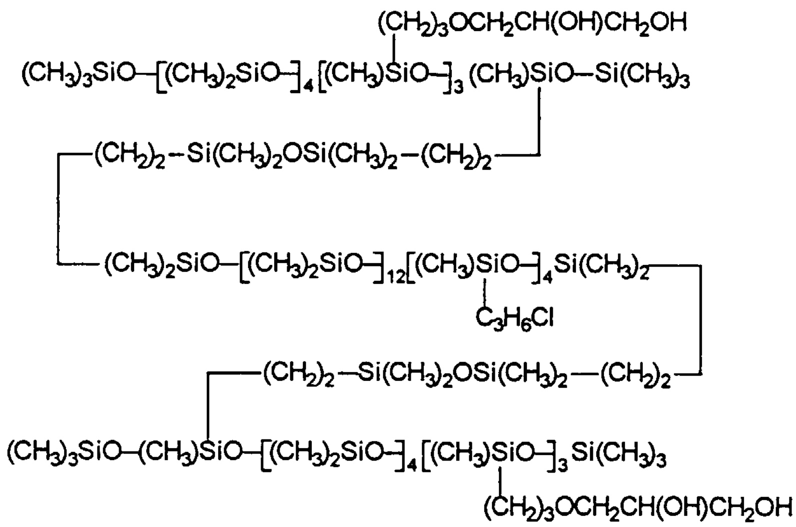

Herstellung von Blockcopolymer 13

Stufe a)

In einem mit Rührer, Thermometer, Gaseinleitung und Rückflußkühler versehenen Kolben werden

| | |
|---|---|
| 171,4 g (0,10 Mol) | Siloxan mit folgender durchschnittlicher Zusammensetzung $H(CH_3)_2SiO\text{-}[(CH_3)_2SiO\text{-}]_{12}[(CH_3)(C_8H_{17})SiO\text{-}]_4Si(CH_3)_2H$ (erhältlich z. B. durch Equilibrierung eines Gemisches von 1,1,3,3-Tetramethyldisiloxan, Octamethylcyclotetrasiloxan und cyclischem Siloxan der Formel $[(CH_3)(C_8H_{17})SiO\text{-}]_4$ mit Trifluormethansulfonsäure) und |
| 55,1 g (0,50 Mol) | 1,7-Octadien |

vorgelegt. Durch die Apparatur wird Stickstoff geleitet, und unter Rühren wird der Kolbeninhalt auf 100 °C aufgeheizt. Nun wird der Ansatz mit 16 mg $Pt_2Cl_4(C_6H_{10})_2$ versetzt und 4 Std. gerührt. Danach läßt sich kein SiH-gebundener Wasserstoff mehr nachweisen. Anschließend wird das im Überschuß eingesetzte 1,7-Octadien im Vakuum (ca. 15 mbar) bei 100 °C abdestilliert. Man erhält als Zwischenprodukt 0,1 Mol Siloxan mit folgender durchschnittlicher Zusammensetzung:

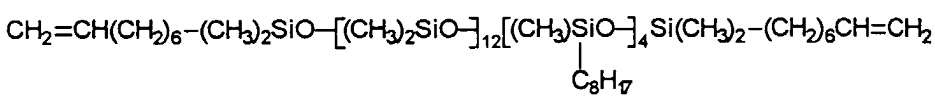

Stufe b)

In einem weiteren mit Rührer, Thermometer, Gaseinleitung und Rückflußkühler versehenen Kolben werden

| | |
|---|---|
| 139,9 g (0,20 Mol) | Siloxan mit folgender durchschnittlicher Zusammensetzung $(CH_3)_3SiO\text{-}[(CH_3)_2SiO\text{-}]_4[(CH_3)HSiO\text{-}]_4Si(CH_3)_3$ |

und

| | |
|---|---|
| 87,2 g (0,66 Mol)[1)] | 3-Allyloxy-1,2-propandiol |

vorgelegt. Durch die Apparatur wird Stickstoff geleitet, und unter intensivem Rühren wird der Kolbeninhalt auf 100 °C aufgeheizt. Nun wird der Ansatz mit 2,3 g $Na_2CO_3$ und 30 mg $Pt_2Cl_4(C_6H_{10})_2$ versetzt. Im Verlauf der Reaktion wird

([1)] siehe Anmerkung bei Blockcopolymer 7, Stufe a))

der Ansatz klar. Nach 40 Min. hat der Ansatz soweit abreagiert, daß der Rest-SiH-Gehalt vom Kolbeninhalt in etwa dem entspricht, der sich einstellt, wenn pro Molekül vom eingesetzten Siloxan durchschnittlich eine SiH-Gruppe verbleibt. Nun wird das in Stufe a) erhaltene Produkt komplett zum Ansatz gegeben, und es wird weiter bei 100 °C gerührt. Nach 5,5 Std. beträgt der SiH-Umsatz 97,8 % (bestimmt über Wasserstoffabspaltung mit n-Butanol in alkalischem Medium). Nach Abkühlung auf Raumtemperatur wird der Ansatz filtriert. Man erhält eine klare, gelbe Flüssigkeit. Das erhaltene Blockcopolymer 13 hat folgende durchschnittliche Zusammensetzung:

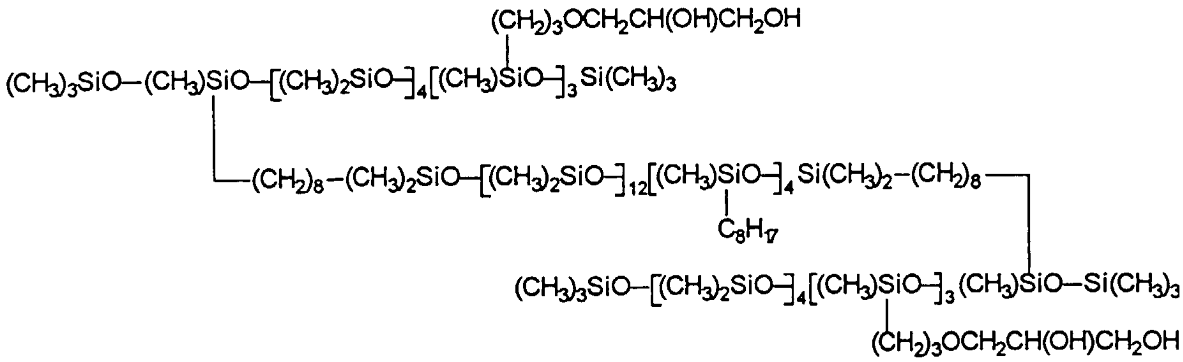

Die weiteren, folgenden Blockcopolymeren sind nach den oben beschriebenen Verfahren hergestellt worden.

Blockcopolymer 14

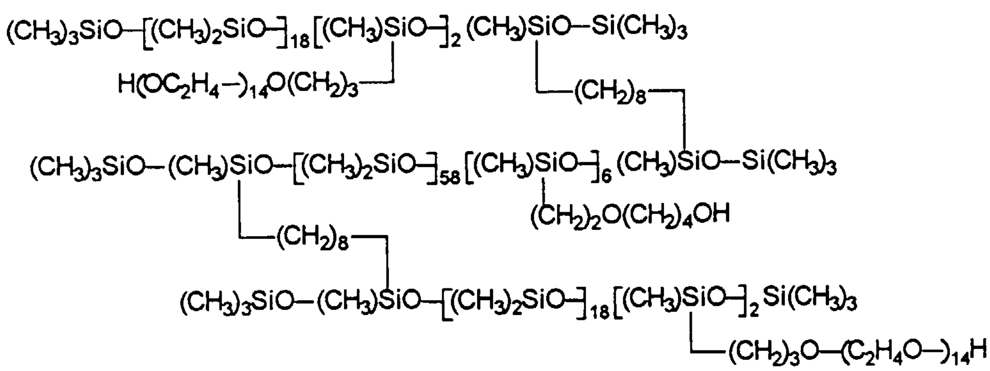

Blockcopolymer 15

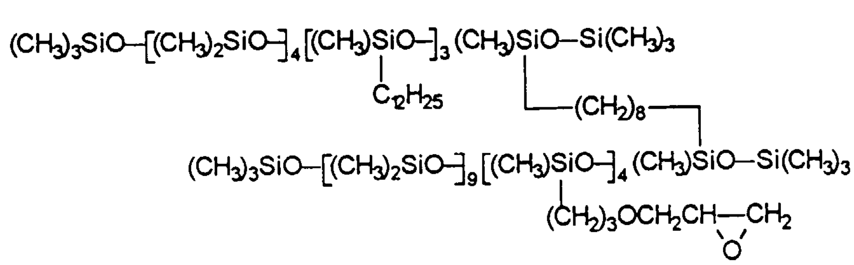

Blockcopolymer 16

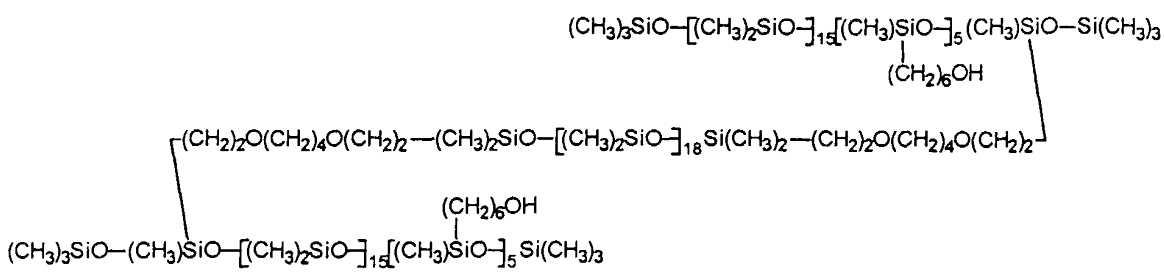

Blockcopolymer 17

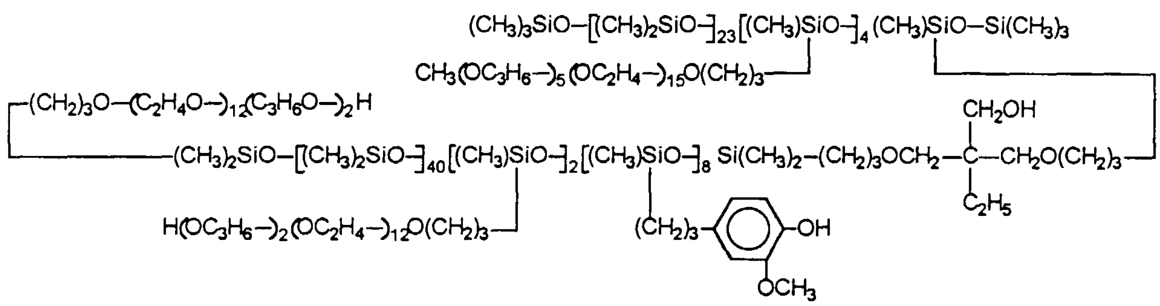

Blockcopolymer 18

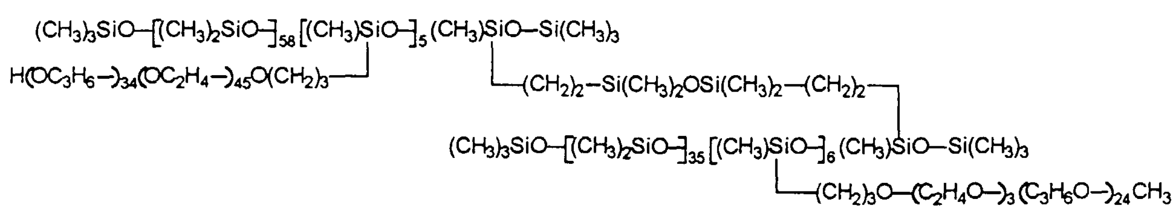

Blockcopolymer 19

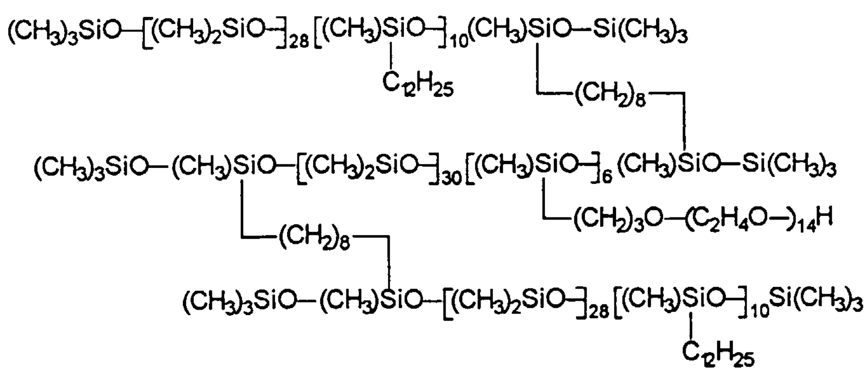

Blockcopolymer 20

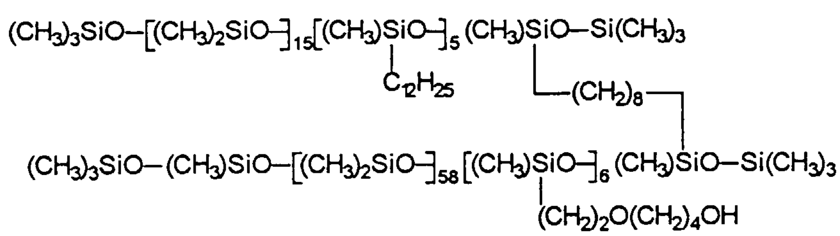

Blockcopolymer 21

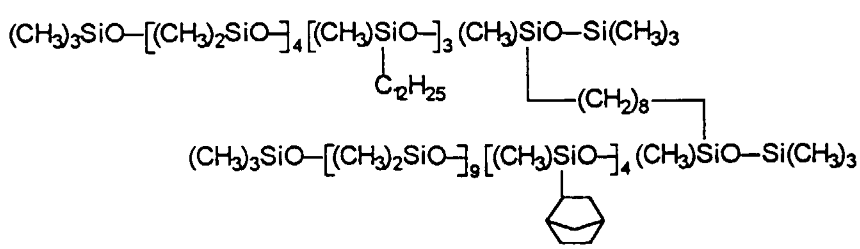

Blockcopolymer 22

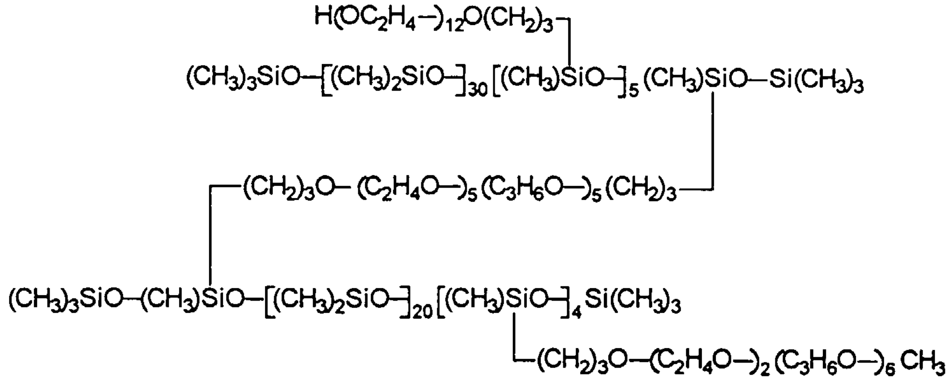

Weiter sind die folgenden, nichterfindungsgemäßen Blockcopolymeren V 1 bis V 4 nach bekannten, in Literatur und Patenten veröffentlichten Methoden hergestellt worden (sie dienen als Vergleichssubstanzen bei den anschließend beschriebenen anwendungstechnischen Untersuchungen):

Blockcopolymer V 1:

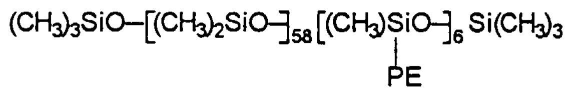

Der Rest PE ist zu 10 % der Rest $-(CH_2)_3O-(C_2H_4O-)_{12}CH_3$
und 30 % der Rest $-(CH_2)_3O-(C_2H_4O-)_5(C_3H_6O-)_{21}CH_3$
und 60 % der Rest $-(CH_2)_3O-(C_2H_4O-)_{45}(C_3H_6O-)_{34}CH_3$

Blockcopolymer V 2:

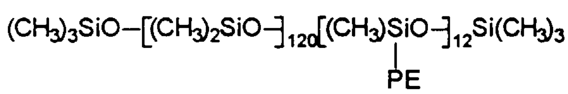

Der Rest PE ist zu 10 % der Rest $-(CH_2)_3O-(C_2H_4O-)_{12}CH_3$
und 30 % der Rest $-(CH_2)_3O-(C_2H_4O-)_5(C_3H_6O-)_{21}CH_3$
und 60 % der Rest $-(CH_2)_3O-(C_2H_4O-)_{45}(C_3H_6O-)_{34}CH_3$

Blockcopolymer V 3:

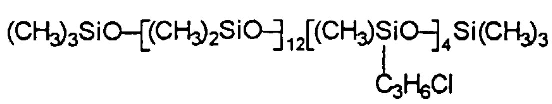

Blockcopolymer V 4:

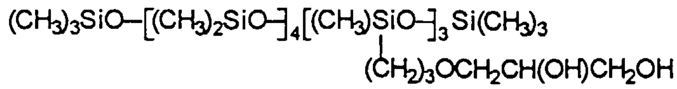

Blockcopolymer V 5:

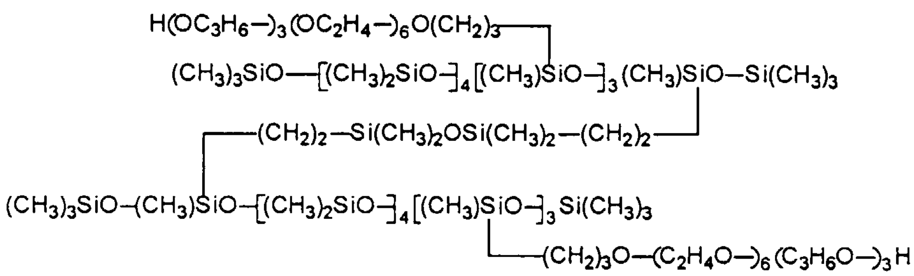

Wie die Beispiele zeigen, lassen sich mit dem neuartigen Strukturprinzip Siloxanblockcopolymere herstellen, bei denen die Eigenschaften der einzelnen, verknüpften Siloxanblockcopolymere unterschiedlich eingestellt werden können. So können maßgeschneiderte Wirksubstanzen für Problemlösungen in einer Reihe von unterschiedlichen Einsatzgebieten synthetisiert werden. Hierzu gehören z. B. Additive für Kosmetikzubereitungen, Lacke und Farben, zur Textil- und Papierbeschichtung (Tissues) und Einsatz als Emulgatoren, Entschäumer, Stabilisatoren bei der Herstellung von Polyurethanschaumstoffen und als Reaktionspartner, wenn reaktive Gruppen vorhanden sind. Im folgenden wird der Einsatz der neuen Siloxanblockcopolymeren in einigen Anwendungen beispielhaft dargestellt.

Die erfindungsgemäßen Blockcopolymeren 1, 2 und 3 und die nichterfindungsgemäßen Blockcopolymeren V 1 und V 2 werden als Additive in folgender Weichschaumformulierung untersucht:

Weichschaumformulierung

| | Gew.-Teile |
|---|---|
| Polyol (OHZ: 46, 11 % EO) | 100 |
| Wasser | 5 |
| tert. Amin | 0,15 |
| Zinnoctoat | 0,23 |
| physik. Treibmittel | 5 |
| Stabilisator | variiert |
| Isocyanat T 80 | 63,04 |

Bei der Verschäumung werden 300 g Polyol eingesetzt. Entsprechend werden die anderen Formulierungsbestandteile umgerechnet.

Zum Austesten des Additives als Stabilisator werden Polyol, Wasser, Amin, Zinnoctoat, Stabilisator und Treibmittel unter gutem Rühren vermischt. Nach Zugabe des Isocyanats wird mit einem Glattrührer 7 Sek. bei 3000 U/Min. gerührt und das Gemisch in einen mit Papier ausgekleideten Holzkasten (Grundfläche 27 cm x 27 cm) gegossen. Zum Austesten des Additives in bezug auf andere Eigenschaften, z. B. als Zellregulator, kann natürlich auch ein anderer

Stabilisator mitverwendet werden. Es entsteht ein Schaumstoff, von dem folgende Daten zur Beurteilung des eingesetzten Stabilisators gemessen werden:

1. Das Rücksacken des Schaumstoffes am Ende der Steigphase (in der nachfolgenden Tabelle mit Rückfall angegeben).
2. Die Zahl der Zellen pro Zentimeter Schaum werden unter einem Mikroskop ausgezählt.

Die bei der Verschäumung erhaltenen Ergebnisse sind in Tabelle 1 angegeben. Die Ergebnisse zeigen, daß die neuartigen Blockcopolymeren in hervorragender Weise so auf ihr gewünschtes Eigenschaftsprofil angepaßt werden können, daß z. B. bei PU-Schaumanwendungen stabile, feine Schäume erhalten werden können. Zum Teil sind die neuen Additive den konventionellen Blockcopolymeren V 1 und V 2 überlegen. So erhält man bei Einsatz der Blockcopolymeren 1 und 2 eine besonders günstige Kombination von geringen Rückfällen und guter Feinzelligkeit.

Tabelle 1

| Einsatz von Copolymer | Gew.-Teile | Rückfall [cm] | Zellen pro cm |
|---|---|---|---|
| 1 | 0,6 / 0,5 | 0,2 / 0,4 | 15 / 14 |
| 2 | 0,6 / 0,5 | 0,3 / 0,5 | 15 / 14 |
| 3 | 0,6 / 0,5 | 0,7 / 1,0 | 14 / 13 |
| V 1 | 0,6 / 0,5 | 0,5 / 0,6 | 13 / 12 |
| V 2 | 0,6 / 0,5 | 0,3 / 0,6 | 13 / 12 |

Die Blockcopolymeren 11, 12, 13, V 3 und V 4 werden als Lackadditive getestet. Zur Prüfung der anwendungstechnischen Eigenschaften werden die modifizierten Silicone einem lufthärtenden Lacksystem in einer Menge von 1 Gew.-% beigemischt und die Mischung mit einem 40-Mikrometer-Drahtrakel auf Bonderstahlblech aufgetragen. Der Lack wird 2 Tage bei 20 °C ausgehärtet und anschließend durch einen Abzugstest mit Tesaband 4154 auf sein Releaseverhalten geprüft. Ein Maß für die Kratzfestigkeit der erhaltenen Lacke ist die Zugkraft, die nötig ist, um einen 500 g schweren Probekörper, der auf drei Schrauben ruht, mit 30 cm pro Minute über den Lack zu ziehen. Zur Prüfung der Beständigkeit der Lackeigenschaften wird dann anschließend der Lack 10 Minuten unter fließendem 20°C warmen Wasser gespült und nach Abtrocknen des Lackes nochmals das Releaseverhalten und die Kratzfestigkeit, wie oben beschrieben, gemessen. Die Ergebnisse sind in Tabelle 2 zusammengefaßt.

Tabelle 2

| Lack mit 1 Gew.-% von Copolymer: | Release [N] | Kratztest [N] | Mischbarkeit | Release nach Abwaschen [N] | Kratztest nach Abwaschen [N] |
|---|---|---|---|---|---|
| Lack ohne Zusatz | 11,6 | 3,2 | | 11,7 | 3,2 |
| V 3 | 3,7 | 0,9 | schlecht | 9,8 | 3,0 |
| V 4 | 8,2 | 2,7 | gut | 8,4 | 2,7 |
| 11 | 5,0 | 1,3 | gut bis befriedigend | 5,4 | 1,4 |
| 12 | 4,7 | 1,1 | gut | 4,9 | 1,3 |
| 13 | 4,4 | 1,1 | gut | 4,5 | 1,2 |

Es zeigt sich, daß die erfindungsgemäßen Substanzen dem Lack sowohl Antikratzeigenschaften als auch abhäsive Eigenschaften vermitteln. Durch die Natur der Substituenten und das Verhältnis der Siliconkette zu der Zahl und Polarität der Substituenten läßt sich die Polarität des Additives und damit auch die Mischbarkeit mit der verwendeten Lackformulierung der jeweiligen Polarität des Lacksystemes anpassen. Dabei bieten die erfindungsgemäßen Produkte deutliche Vorteile bei dem Bestreben, sowohl auf der einen Seite abhäsive und Antikratzeigenschaften als auch gute Mischbarkeit und Dauerbeständigkeit miteinander zu vereinen.

Die Blockcopolymeren 9 und 10, die als 50 gew.-%ige Lösung in Laurinsäurehexylester vorliegen, werden als Emulgatoren zur Herstellung einer W/O-Emulsion eingesetzt. Als Vergleich dient das nicht erfindungsgmäße Blockcopolymer V 5.

Rezeptur der Emulsion

| | | Gew.-% |
|---|---|---|
| Teil a) | Emulgator | 2,0 |
| | Triglycerintrioleat | 0,5 |
| | Octamethylcyclotetrasiloxan | 8,5 |
| | Isopropylmyristat | 4,0 |
| | Vaseline DAB 8 | 5,0 |
| Teil b) | Wasser | 78,0 |
| | NaCl | 2,0 |

Die Herstellung der Emulsionen erfolgt in einem Behälter aus Glas, der mit einem Rührer versehen ist. In den Behälter werden die Bestandteile a) gegeben und unter Rühren leicht erwärmt. Danach wird das Wasser, in welchem das Kochsalz gelöst ist, zu dem Gemisch aus Emulgator und Öl gegeben. Die erhaltene Emulsion wird gerührt, bis sie Raumtemperatur annimmt.
Auf diese Weise erhält man mit den Blockcopolymeren 9 und 10 stabile, cremeartige Emulsionen, die auch nach zwei Wochen noch keine Anzeichen eines Brechens der Emulsion zeigen. Die Emulsionen lassen sich gut auf der Haut verteilen und besitzen ein gutes Einziehvermögen. Die unter Verwendung des Blockcopolymeren V 5 erhaltene Emulsion zeigt dagegen schon nach einer Woche eine ungleichmäßige Trübung am Boden des Glasbehälters im Vergleich zum oberen Teil der Emulsion, also erste Anzeichen einer beginnenden Phasenseparation.

## Patentansprüche

1. Siloxanblockcopolymere der allgemeinen durchschnittlichen Formel:

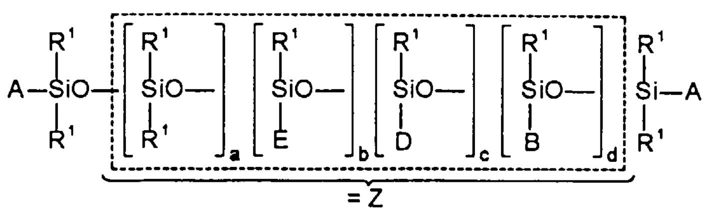

(I)

wobei die Reste und Indices folgende Bedeutung haben:

A = Rest $R^1$, Rest B, Rest E oder ein Rest der Formel IIa

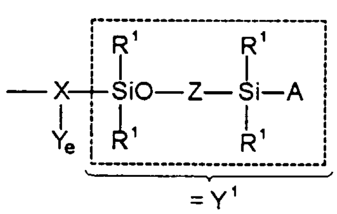

(IIa)

oder ein Rest der Formel IIb

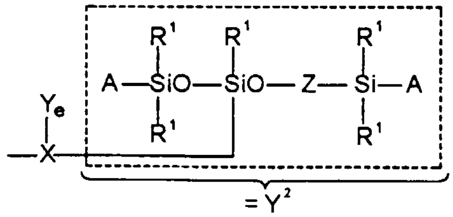

(IIb)

B = Rest der Formel IIa oder IIb
Y = Rest $Y^1$ oder Rest $Y^2$,
D = Rest der Formel

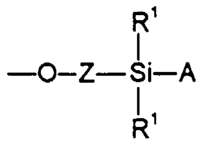

$R^1$ = ein Alkylrest mit 1 bis 30 Kohlenstoffatomen, ein substituierter Alkylrest, ein gegebenenfalls substituierter Arylrest oder ein gegebenenfalls substituierter Alkarylrest, wobei jedoch mindestens 80 % der Reste $R^1$ Methylgruppen sind,
a hat einen Wert von 3 bis 200,
b hat einen Wert von 0 bis 50,
c hat einen Wert von 0 bis 10,
d hat einen Wert von 0 bis 5 und
e hat einen Wert von 0 bis 4,

wobei die Werte für a, b, c, d und e in den einzelnen Segmenten Z der Reste A, B und D unterschiedlich sein können,

E = Rest, der

a) ein Rest der allgemeinen Formel

$$-R_f^2-O-(C_mH_{2m}O-)_nR^3$$

ist, wobei

$R^2$ ein zweiwertiger Alkylrest, der auch verzweigt sein kann, ist und
f einen Wert von 0 oder 1,
m einen Wert von durchschnittlich 2 bis 4,
n einen Wert von 0 bis 100 hat und
$R^3$ ein Wasserstoffrest, ein gegebenenfalls substituierter Alkylrest mit 1 bis 6 Kohlenstoffatomen, ein Acylrest oder ein -O-CO-NH-$R^4$-Rest ist, bei dem $R^4$ ein gegebenenfalls substituierter Alkyl- oder Arylrest ist, und/oder

b) die Bedeutung eines epoxyfunktionalisierten, gegebenenfalls Heteroatome enthaltenden Alkylsubstituenten hat, und/oder
c) die Bedeutung eines Mono-, Di- und Trihydroxyalkylsubstituenten, der auch aromatisch oder verzweigt und partiell oder vollständig verethert oder verestert sein kann, hat, und/oder
d) die Bedeutung eines halogen- oder pseudohalogensubstituierten Alkyl-, Aryl- oder Aralkylrestes, der gegebenenfalls auch verzweigt sein kann, hat,

X = ein mehrwertiger organischer Rest,

mit der Maßgabe, daß mindestens ein Rest der Formel IIa oder IIb im Molekül vorhanden ist und mindestens zwei der Segmente Z unterschiedlich sind.

**2.** Blockcopolymere der allgemeinen durchschnittlichen Formel gemäß Anspruch 1, wobei

X ein Verbrückungsglied der Formel

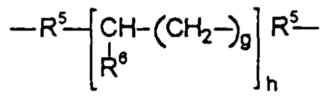

ist, wobei

$R^5$ ein zweiwertiger Alkylrest, der auch verzweigt sein kann, und
$R^6$ ein Wasserstoffrest, ein gegebenenfalls verzweigter Alkylrest oder der Rest $R^5$ ist und
g einen Wert von 0 bis 5 und
h einen Wert von 0 bis 4 hat,

oder der Formel

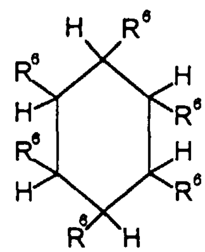

wobei $R^6$ die Bedeutung wie zuvor hat,
oder der Formel

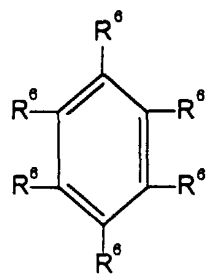

wobei $R^6$ die Bedeutung wie zuvor hat,
oder der Formel

$$-R^5-O-(C_{m'}H_{2m'}O-)_{n'}R^5-$$

wobei

$R^5$ die Bedeutung wie zuvor,
m' einen Wert von durchschnittlich 2 bis 4 und
n' einen Wert von 0 bis 20 hat,

oder der Formel

$$-R^5-(CO-)_kOCH_2-(CR^7_2-)_iCH_2O-(CO-)_kR^5-$$

wobei

$R^5$ die Bedeutung wie zuvor hat und
$R^7$ ein Wasserstoffrest, ein Alkylrest, ein Hydroxyalkylrest oder der Rest $-CH_2O-(CO)_kR^5-$ ist und
i einen Wert von 0 bis 10 und
k einen Wert von 0 oder 1 hat,

oder der Formel

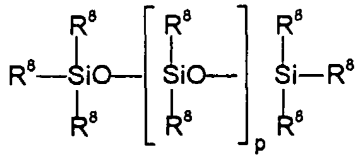

wobei

$R^8$ ein Alkylrest, ein substituierter Alkylrest, ein Phenylrest oder der Rest $R^5$ ist und
p einen Wert von 0 bis 10 hat, wobei der Wert von 0 bevorzugt ist, und

der Rest $R^8$, wenn er die Bedeutung eines Alkylrestes hat, bevorzugt ein Alkylrest mit 1 bis 6 Kohlenstoffatomen ist, besonders bevorzugt ein Methylrest,
oder der Formel

$$-R^5-NH-CO-NH-R^5-$$

wobei

$R^5$ die Bedeutung wie zuvor hat.

**3.** Verwendung der Siloxanblockcopolymeren gemäß Anspruch 1 oder 2 als oberflächenaktive Agentien.

**4.** Verwendung der Siloxanblockcopolymeren gemäß Anspruch 1 oder 2 als Additive bei der Herstellung von Polyurethanschäumen.

## Claims

**1.** A siloxane block copolymer of the general average formula:

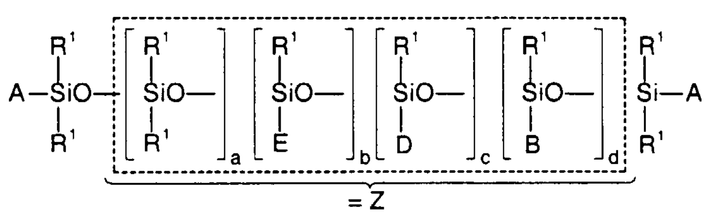

(I)

where the radicals and indices have the following meaning:

A = radical $R^1$, radical B, radical E or a radical of the formula IIa

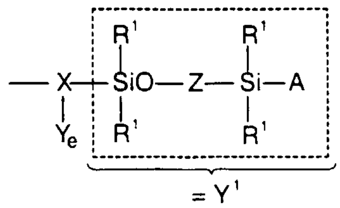

(IIa)

or a radical of the formula IIb

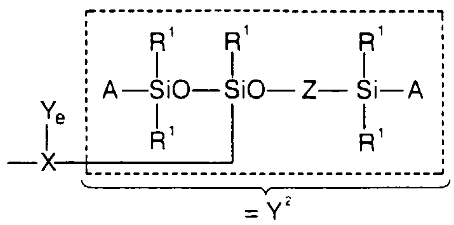

(IIb)

B = radical of the formula IIa or IIb
Y = radical $Y^1$ or radical $Y^2$,
D = radical of the formula

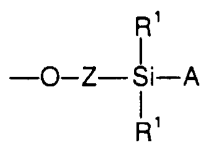

$R^1$ = an alkyl radical having 1 to 30 carbon atoms, a substituted alkyl radical, an optionally substituted aryl radical or an optionally substituted alkaryl radical, where however at least 80% of the radicals $R^1$ are methyl groups,

has a value from 3 to 200,
b has a value from 0 to 50,
c has a value from 0 to 10,
d has a value from 0 to 5 and
e has a value from 0 to 4,

where the values for a, b, c, d and e in the individual segments Z of the radicals A, B and D may be different,

E = radical which

a) is a radical of the general formula

$$-R^2_f-O-(C_mH_{2m}O-)_nR^3$$

in which

$R^2$ is a divalent alkyl radical which may also be branched and
f has a value of 0 or 1,
m has a value of, on average, from 2 to 4,
n has a value from 0 to 100 and
$R^3$ is a hydrogen radical, an optionally substituted alkyl radical having 1 to 6 carbon atoms, an acyl radical or a -O-CO-NH-$R^4$ radical in which $R^4$ is an optionally substituted alkyl or aryl radical, and/or

b) has the meaning of an epoxy-functionalized alkyl substituent optionally containing hetero atoms, and/or
c) has the meaning of a mono-, di- and trihydroxyalkyl substituent which may also be aromatic or branched and partially or completely etherified or esterified, and/or d) has the meaning of a halogen- or pseudohalogen-substituted alkyl, aryl or aralkyl radical which optionally may also be branched,

X = a polyvalent organic radical,

with the proviso that at least one radical of the formula IIa or IIb is present in the molecule and at least two of the segments Z are different.

**2.** The block copolymer of the general average formula as claimed in claim 1, wherein

X is a bridging radical of the formula

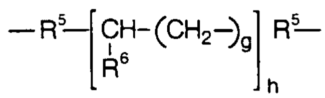

in which
$R^5$ is a divalent alkyl radical which may also be branched and
$R^6$ is a hydrogen radical, an optionally branched alkyl radical or the radical $R^5$ and
g has a value from 0 to 5 and
h has a value from 0 to 4,

or of the formula

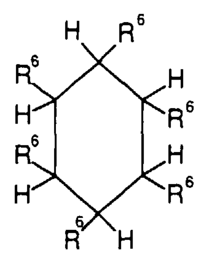

in which $R^6$ has the same meaning as above,
or of the formula

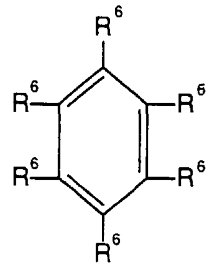

in which $R^6$ has the same meaning as above, or of the formula

$$-R^5-O-(C_{m'}H_{2m'}O-)_{n'}R^5-$$

in which

$R^5$ has the same meaning as above,
m' has a value of, on average, from 2 to 4 and
n' has a value from 0 to 20,

or of the formula

$$-R^5-(CO-)_kOCH_2-(CR^7_2-)_iCH_2O-(CO-)_kR^5-$$

in which

$R^5$ has the same meaning as above and
$R^7$ is a hydrogen radical, an alkyl radical, a hydroxyalkyl radical or the radical $-CH_2O-(CO)_kR^5-$ and
i has a value from 0 to 10 and
k has a value of 0 or 1,
or of the formula

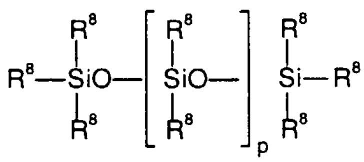

in which

$R^8$ is an alkyl radical, a substituted alkyl radical, a phenyl radical or the radical $R^5$ and
p has a value from 0 to 10, the value of 0 being preferred, and

if it has the meaning of an alkyl radical, the radical $R^8$ is preferably an alkyl radical of 1 to 6 carbon atoms, particularly preferably a methyl radical,
or of the formula

$$-R^5-NH-CO-NH-R^5-$$

in which

$R^5$ has the same meaning as above.

3. The use of the siloxane block copolymers as claimed in claim 1 or 2 as surface-active agents.

4. The use of the siloxane block copolymers as claimed in claim 1 or 2 as additives in the preparation of polyurethane foams.

**Revendications**

1. Copolymères blocs de siloxanes de formule moyenne générale :

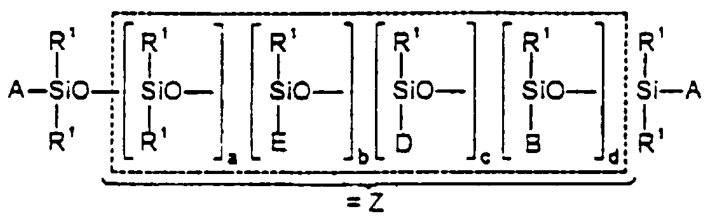

(I)

dans laquelle les radicaux et les indices ont la signification suivante :

A = un radical $R^1$, un radical B, un radical E ou un radical de formule IIa

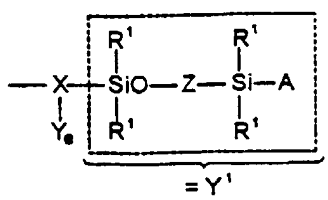

(IIa)

ou un radical de formule IIb

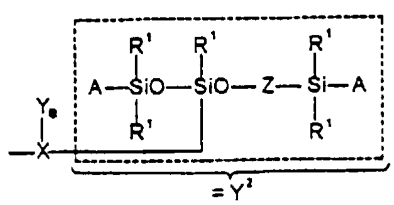

(IIb)

B = un radical de formule IIa ou IIb
Y = un radical $Y^1$ ou un radical $Y^2$
D = un radical de formule

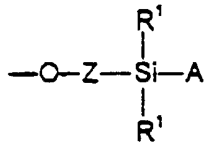

$R^1$ = un radical alkyle ayant de 1 à 30 atomes de carbone, un radical alkyle substitué, un radical aryle éventuellement substitué ou un radical alkaryle éventuellement substitué, au moins 80% des radicaux $R^1$ étant toutefois des groupes méthyle,
a vaut de 3 à 200,
b vaut de 0 à 50,
c vaut de 0 à 10,
d xvaut de 0 à 5, et
e vaut de 0 à 4,

les valeurs de a, b, c, d et e dans les segments individuels Z des radicaux A, B et D pouvant être différentes,

E = un radical qui représente

a) un radical de formule générale

$$-R_f^2-O-(C_mH_{2m}O-)_nR^3$$

dans laquelle

$R^2$ représente un radical alkyle bivalent qui peut également être ramifié, et
f vaut 0 ou 1,
m vaut en moyenne de 2 à 4,
n vaut de 0 à 100, et
$R^3$ représente un radical hydrogène, un radical alkyle éventuellement substitué ayant de 1 à 6 atomes de carbone, un radical acyle ou un radical -O-CO-NH-$R^4$, dans lequel $R^4$ représente un radical alkyle ou aryle éventuellement substitué, et/ou

b) un substituant alkyle à fonction époxy renfermant éventuellement des hétéroatomes, et/ou
c) un substituant mono-, di- ou trihydroxyalkyle qui peut également être aromatique ou ramifié et partiellement ou totalement étherifié ou estérifié, et/ou
d) un radical alkyle, aryle ou aralkyle halogéno- ou pseudohalogéno-substitué, qui peut être également éventuellement ramifié,

X = un radical organique polyvalent,

à condition qu'au moins un radical de formule IIa ou IIb soit présent dans la molécule et qu'au moins deux des segments Z soient différents.

**2.** Copolymères blocs de formule moyenne générale selon la revendication 1, dans laquelle

X est un groupement de pontage de formule

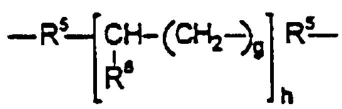

dans laquelle

- $R^5$ représente un radical alkyle bivalent qui peut être également ramifié, et
- $R^6$ représente un radical hydrogène, un radical alkyle éventuellement ramifié ou le radical $R^5$, et
- g vaut de 0 à 5 et
- h vaut de 0 à 4,

ou de formule

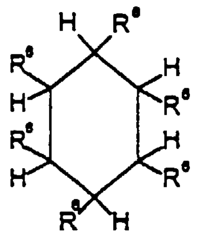

dans laquelle $R^6$ a la même signification que précédemment,
ou de formule

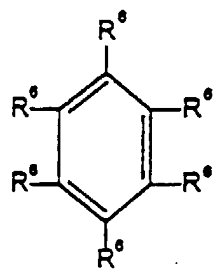

dans laquelle $R^6$ a la même signification que précédemment,
ou de formule

$$-R^5-O-(C_{m'}H_{2m'}O-)_{n'}R^5-$$

dans laquelle

- $R^5$ a la même signification que précédemment,
- m' vaut en moyenne de 2 à 4, et
- n' vaut de 0 à 20,

ou de formule

$$-R^5-(CO-)_kOCH_2-(CR^7_2-)_iCH_2O-(CO-)_kR^5-$$

dans laquelle

- $R^5$ a la même signification que précédemment et
- $R^7$ représente un radical hydrogène, un radical alkyle, un radical hydroxyalkyle ou le radical $-CH_2O-(CO-)_kR^5-$ et
- i vaut de 0 à 10

k vaut de 0 à 1,

ou de formule

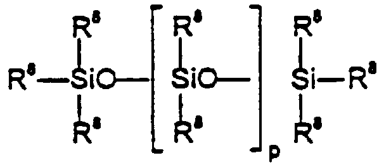

dans laquelle

$R^8$ représente un radical alkyle, un radical alkyle substitué, un radical phényle ou le radical $R^5$ et
p vaut de 0 à 10, la valeur 0 étant préférée, et le radical $R^8$, lorsqu'il représente un radical alkyle, est de préférence un radical alkyle ayant de 1 à 6 atomes de carbone, particulièrement préférablement un radical méthyle,
ou de formule

$$-R^5\text{-NH-CO-NH-}R^5\text{-}$$

dans laquelle

$R^5$ a la même signification que précédemment.

**3.** Utilisation des copolymères blocs de siloxanes selon la revendication 1 ou 2 en tant qu'agents tensioactifs.

**4.** Utilisation des copolymères blocs de siloxanes selon la revendication 1 ou 2 en tant qu'additifs lors de la préparation de mousses de polyuréthanes.